# EUROPEAN PATENT APPLICATION

(11) **EP 4 660 772 A1**
(43) Date of publication of application: **10.12.2025**
(21) Application number: 25180164.3
(22) Date of filing: 02.06.2025
(51) Int. Cl.: G06F 3/06

(54) **RAID-ON-CHIP DEVICES AND CLUSTERS**

(30) Priority: 06.06.2024 US 202418736435
(71) Applicant: Avago Technologies International Sales Pte. Limited, Singapore 768923 (SG)
(72) Inventor: Jana, Arun Prakash, Irvine, CA, 92618 (US); Kumar, Amar Deep, Irvine, CA, 92618 (US)
(74) Representative: Grünecker Patent- und Rechtsanwälte PartG mbB

(57) **Abstract**

Devices, systems, and corresponding methods, including without limitation RAID devices, I/O controllers, and RAID clusters, that can provide enhanced storage solutions. A RAID device might be a RAID-on-chip device. A RAID cluster can comprise a plurality of RAID devices and/or I/O controllers that can provide one or more virtual disks for use by a host. In some cases, a RAID cluster can be a ROC cluster, which includes one or more ROC devices.

## Description

### Cross-Reference to Related Applications

This application may be related to U.S. Patent App. No. --/------, titled "Capability Negotiation and Intelligent Workload Management among RAID-on-Chip Devices in a Cluster," filed by Arun Prakash Jana et *al.* on a date even herewith (attorney docket no. 5009.240023US01), the entire disclosure of which is incorporated herein by reference for all purposes.

### Technical Field

This disclosure relates generally to RAID storage systems and more particularly to solutions for managing virtual disks in a RAID environment.

### Background

A redundant array of independent disks (RAID) storage system can logically consolidate multiple physical disks into one or more consolidated pools of storage resources. Often, a RAID controller will handle the management of these resources and will allocate the resources into one or more virtual disks (VD) (also referred to herein as "logical devices" or LD), each of which appears to the host (*e*.*g*., a computer operating system in communication with the controller) to be a single physical disk.

RAID systems are categorized according to a "level," which corresponds to the way in which data is written to the physical disks of the array. For example, RAID level 0 stripes data across all the disks in the array, with no redundancy or fault tolerance, while RAID level 1 mirrors data across disks, with full redundancy. Some RAID levels employ parity, which can provide fault tolerance (*e*.*g*., the loss of a certain number of physical disks in the array without data loss) while using the capacity of the physical disks more efficiently than a mirroring scheme. For example, RAID levels 5 and 6, and various nested RAID levels (*e*.*g*., RAID level 5+0, or RAID level 50) employ distributed parity, wherein parity strips are written across various physical disks.

Generally, a host will communicate with a RAID controller that manages one or more virtual disks for that hosts. Each RAID controller, however, has limited bandwidth, which relates to the RAID functionality of the controller, rather than the input-output (IO) throughput between the controller to the attached physical disks. One solution to these limitations is to add another RAID controller to the system, but issues of cost and host capacity can affect the scalability of a RAID system in this way. Moreover, a virtual disk generally can be managed by only one RAID controller. These issues can impose limitations on the number of virtual disks that a host can support and/or can present affect the availability of a virtual disk, *e*.*g*., if a RAID controller managing that virtual disk experiences problems.

While RAID systems can provide significant advantages, it would be helpful if RAID systems could provide additional flexibility and scalability.

### Brief Description of the Drawings

Figs. 1A and 1B illustrate RAID-on-chip clusters in accordance with one set of embodiments.
Figs. 2A and 2B illustrate exemplary RAID arrays and virtual disk, in accordance with some embodiments.
Fig. 3 illustrates an exemplary layout of a virtual disk employing parity, in accordance with some embodiments.
Fig. 4A is a block diagram illustrating a virtual disk operating in write-back mode, in accordance with some embodiments.
Fig. 4B is a block diagram illustrating a virtual disk operating in write-through mode, in accordance with some embodiments.
Fig. 5 is a block diagram illustrating a RAID controller, in accordance with some embodiments.
Fig. 6 is a block diagram illustrating a RAID-on-chip device, in accordance with some embodiments.
Fig. 7 is a block diagram illustrating an IO controller device, in accordance with some embodiments.
Figs. 8-15 are flow diagrams illustrating various procedures that can be employed a RAID-on-chip cluster, in accordance with some embodiments.
Fig. 16 is a block diagram illustrating example components of a computer system in accordance with some embodiments.

### Detailed Description

### Overview

Some embodiments provide devices and systems, including without limitation RAID devices, IO controllers, and RAID clusters, that can provide enhanced storage solutions. In some embodiments, a RAID device might be a RAID controller or a RAID-on-chip (ROC) device, *e*.*g*., as described in further detail below. A RAID cluster can comprise a plurality of RAID devices and/or IO controller (IOC) devices that can provide one or more virtual disks (VD) for use by a host. In some cases, a RAID cluster can be a ROC cluster, which includes one or more ROC devices.

An IO Controller (IOC) can work independently as a node in a device network, such as a storage network. It might communicate with a host over the Peripheral Component Interconnect Express (PCle) protocol with the host working as the root complex. The controller also connects devices (such as physical disk, peripherals, etc.) in the backend and communicates to those over a variety of interfaces, including without limitation PCle, serial advanced technology attachment (SATA), small computer systems interface (SCSI) serial attached SCSI (SAS), Non-Volatile Memory Host Controller Interface Specification (NVMHCIS, NVM express, or NVMe) interfaces. An IOC provides the capability to connect to a large number of storage devices through a single interface. A RAID controller, on the other hand, comes with many additional features like high data availability, reliability, data loss/corruption prevention, fault-tolerance and numerous storage management options. Feature-wise, the RAID controller might be considered a superset of the IOC, in that it performs the functions of an IOC but can also provide features offered by RAID.

To distinguish the RAID-specific functionality from the RAID + IOC features often provided by a RAID controller, this disclosure uses the term "ROC" to describe the RAID-specific functionality, and the term "ROC device" to describe a device that includes this RAID-specific functionality without the functionality of an IOC. Because, in an aspect, a ROC device might lack the physical interface of an IOC, it often can be packaged as a single chip or system-on-a-chip (SoC), which can provide advantages in manufacturing, product cost, and/or implementation (*e*.*g*., smaller footprint and/or simplified connections). It should be noted, however, that embodiments are not limited to a particular architecture or form factor; instead, the term ROC is used broadly and generally to refer to any device that can provide the RAID-specific functionality of a RAID controller without providing the IOC features of a RAID controller. Conversely, the term "RAID device" is used herein to describe any device (*e*.*g*., ROC device, RAID controller, etc.) that is capable of performing RAID-specific features, regardless of whether that device implements IOC features. A device that can perform the functions of an IO controller without any of the RAID features is referred to herein as an "IOC device."

Due to the additional overhead of a variety of RAID-specific features, *e*.*g*., data caching, parity generation for Parity VDs, processing and traffic intensive operations (like rebuild, copyback), background operations, etc., a RAID controller positioned between the host and the physical disks often becomes a bottleneck to IO throughput, due to, *e*.*g*., memory as well and/or processing limitations. For example, IO performance during a VD rebuild is a matter of great concern for RAID hardware manufacturers. The limitation is also evident from supported configurations. For example, some RAID controllers can maintain IO connections with up to 1000 drives, but due to, *e*.*g*., processor and/or memory limitations, the RAID controller might support only, *e*.*g*., 240 drives for RAID features.

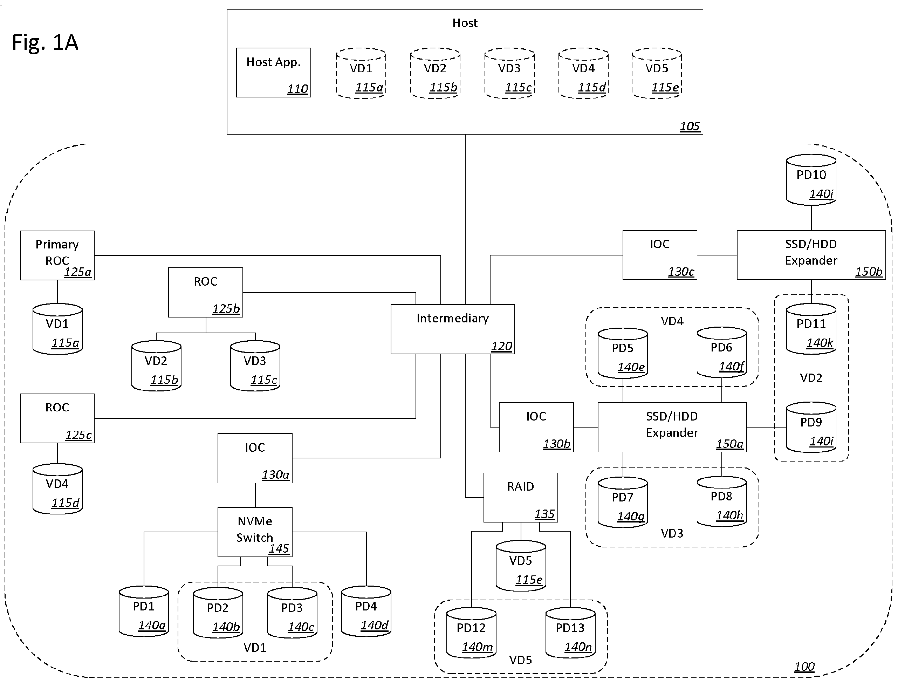

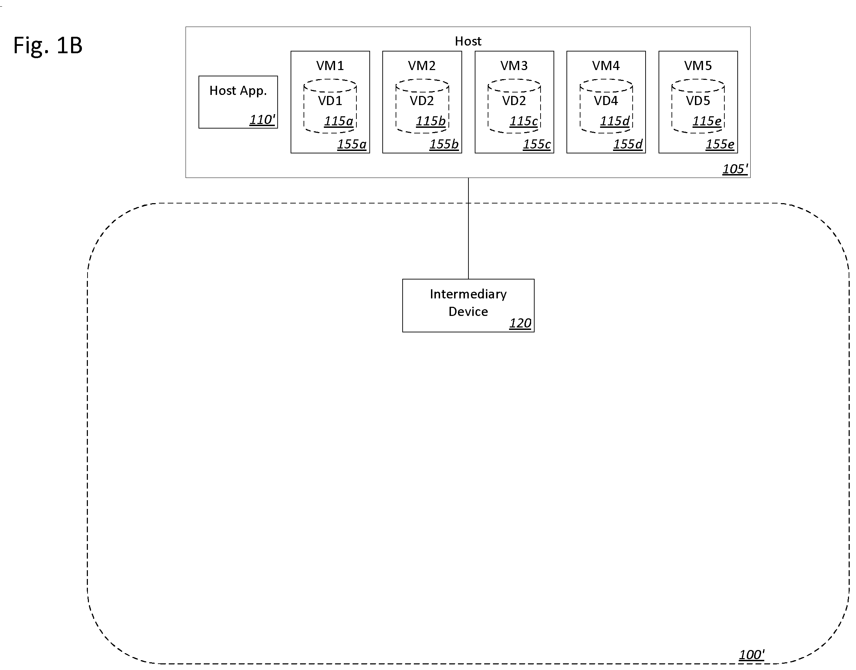

RAID devices, ROC devices, IOC devices, and/or ROC clusters provided by various embodiments can provide enhanced options for scaling RAID storage. Exemplary ROC clusters 100 and 100' are illustrated by Figs. 1A and 1B. Such ROC clusters will be described in further detail below. In some embodiments, such clusters can provide greater scalability than typical RAID controller systems, greater customizability and flexibility in the use and configuration of hardware, cost and/or power efficiencies, and/or increased RAID performance. While exemplary embodiments are described below, each of the described embodiments can be implemented separately or in any combination, as would be appreciated by one skilled in the art. Thus, no single embodiment or combination of embodiments should be considered limiting.

### Virtual Disk Technology

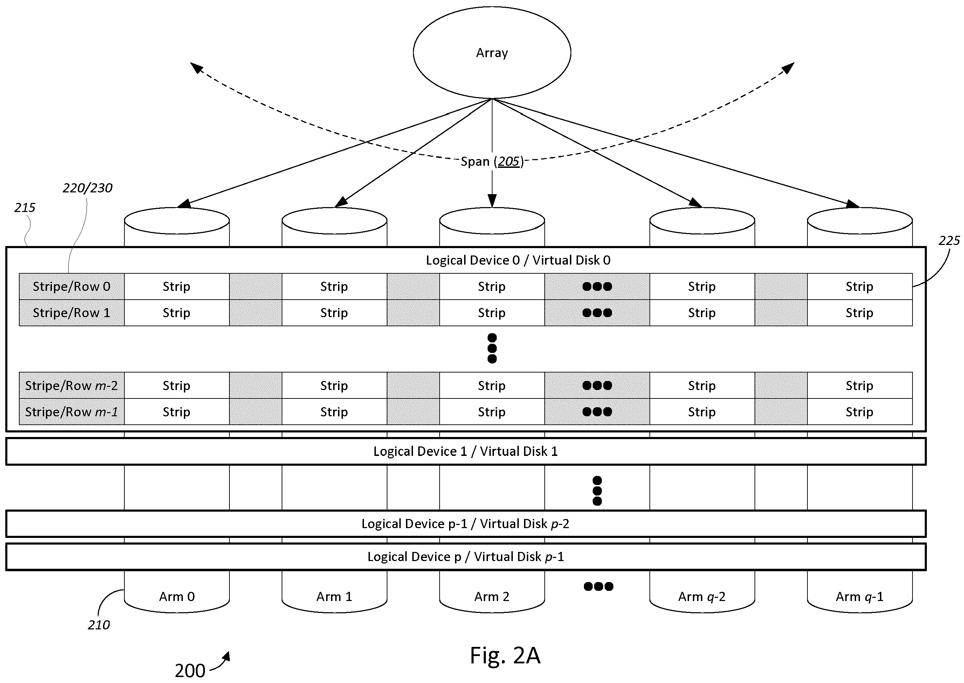

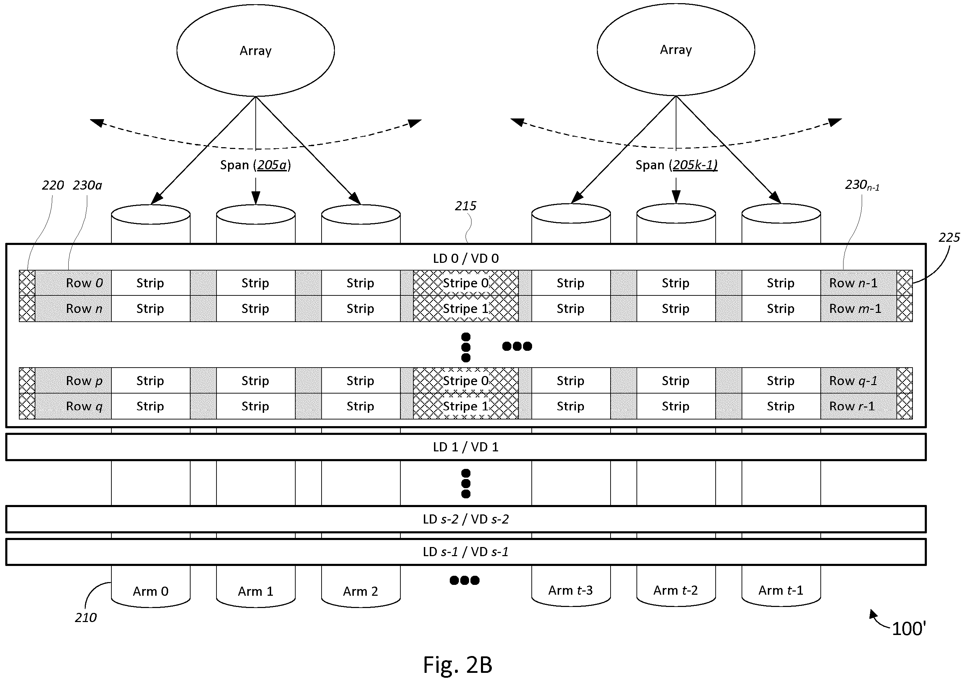

In describing various embodiments, this disclosure refers frequently to virtual disks (VD), also known in the art as logical devices (LD). As noted above, a VD often can be part of a RAID array. Fig. 2A illustrates a single span RAID array 200, while Fig. 2B illustrates a multiple-span RAID array 200', both of which can be used to provide VDs in accordance with some embodiments. The array 200 of Fig. 2A utilizes a single span 205 of physical disks 210, each of which is also referred to herein as an "arm" of the VD. As illustrated on Fig. 2A, the array 200 is divided into a plurality of VDs 215. As illustrated by VD 215a, a VD 215 can include a plurality of stripes 220. Each stripe 220 includes a strip 225 from each arm 210 of the VD 215. A "strip" therefore describes a unit of storage on a single physical disk (arm). In an aspect, each strip 225 is the same size. As used herein the term "logical block" (LBA) means the smallest amount of data that can be written or read in a single drive IO, and each LBA has a fixed size (*e*.*g*., 4 KiB). Each strip 225 generally is a fixed number of LBA, such that a strip 225 might be a multiple of the LBA size (*e*.*g*., 64 KiB, 128 KiB, 256 KiB, etc.).

The multi-span array 200' of Fig. 2B is similar, except it includes multiple spans 205, each of which includes its own set of arms 210. In this case, a row 230 comprises the strips 225 from a single span 205, and the stripe 220 comprises the 5corresponding row 230 from each span 205. In some embodiments, all of the spans 205 are homogenous (*e*.*g*., each span 205 contains the same number of arms 210, the size of each strip 225 in each span 205 is the same, etc.). In another aspect, a VD 215 starts on a stripe boundary. Thus, when comparing the arrays 200 and 200', each stripe 215 in the single-span array 200 is the same as a row 230 in the multi-span array 200'.

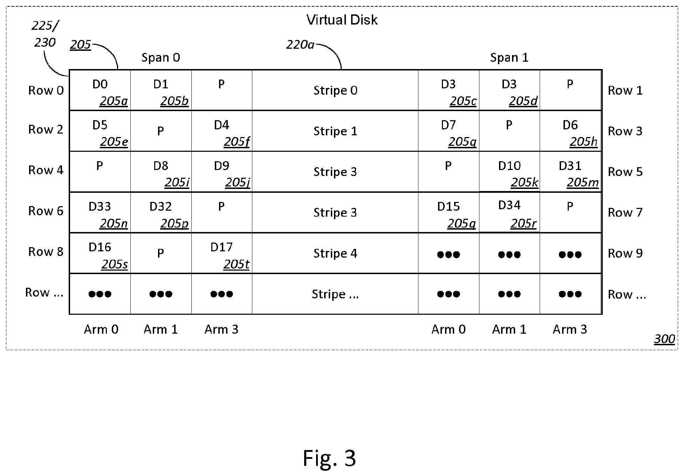

The arrays 200 and 200', for ease of description, do not include parity data. Fig. 3 illustrates an exemplary layout of a VD 300 that comprises three full stripes 220 (Stripes 0-2) and a half stripe (Row 8) of labeled LBAs 305. Each stripe 220 comprises two rows 230; for example, Stripe 0 comprises Row 0 and Row 1. For the sake of simplicity, each row 230 comprises one strip 225, and each strip 225 comprises three LBAs 305. For example, the first row, 230a (Row 0) consists of a single strip 225a, and that strip 225a comprises two data LBAs 305 (D0 and D1), and a parity block (P). (The parity block does not store any unique data but instead stores data from which corrupted LBA can be reconstructed.) In the case of a single-spanned virtual disk (such as that depicted in Fig. 2A), the stripe size is equivalent to the row size, because there is only one span. Hence, the stripe size of the exemplary VD 300 of Fig. 3 is 4 LBA.

It should be noted that the number of entities (*e*.*g*., arms, stripes, rows, etc.) displayed in Figs. 2A, 2B, and 3 is simplified for ease of description, and that a VD within the scope of the various embodiments can include any number or size of such entities, up to the capacity supported by implementation-specific hardware (*e*.*g*., controller hardware, physical drive hardware, etc.), firmware, and/or software.

Each virtual disk generally is subject to one of two write cache policies: a write-back policy and a write-through policy. In either case, the RAID device receives from the host data to be written in a transaction. The transaction generally will be implemented in a number of input-output operations (IO) performed by the RAID device. Under a write-back policy, the RAID device sends a data transfer completion signal to the host when controller has performed the necessary IOs to store the data from the transaction in the controller's cache. By contrast, under a write-through policy, the controller does not send a completion signal to the host until the transaction is actually written (*e*.*g*., with drive IOs) to the physical media of the virtual drives on which it will be stored. The data rate provided to the host is higher under a write-back policy because the cache generally is implemented in random access memory (*e*.*g*., dynamic random-access data (DRAM) or its variants) which provides significantly faster IO transfer rates than the physical drives, which might be solid-state drives (SSD), hard disk drives (HDD), etc. The DRAM provides low latency and high throughput for write-intensive applications. In some cases, the write-back policy will result in performance gains of up to 50% in host transactions due to the performance advantages of DRAM.

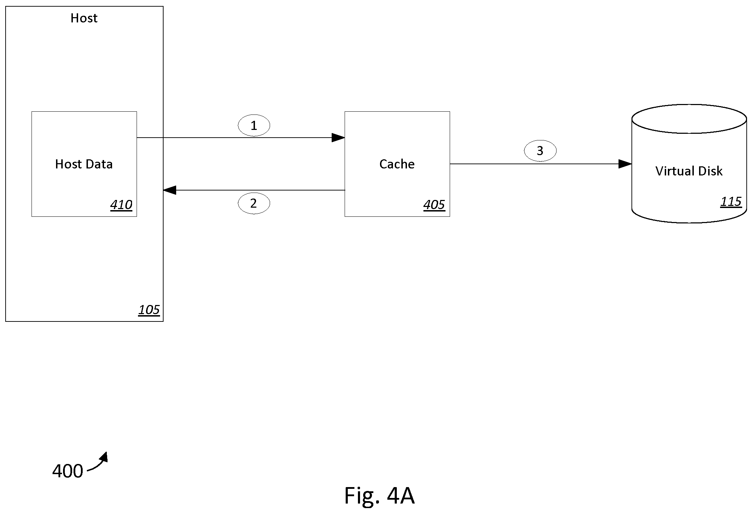

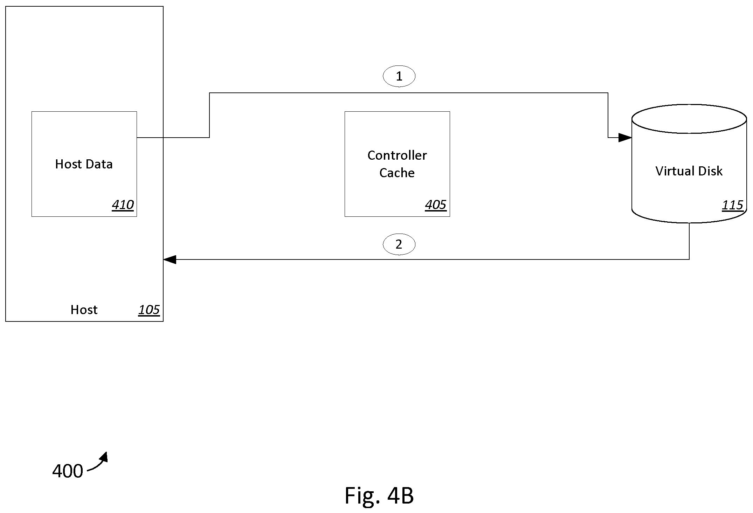

These two techniques are illustrated by Figs. 4A and 4B, respectively. As noted above, a typical RAID controller offers the end user the option to configure a VD either in a write-back mode or a write-through mode depending on the user's requirements. Thus, a VD can be understood to be either a "write-back" volume or a "write-through" volume. As used herein, the term "write-back" means a mode or technique in which a RAID device writes IOs to a cache and provides confirmation that the IOs are complete before the IOs are written to the VD. An example of a write-back technique is illustrated by Fig. 4A, which generally illustrates a system 100 with a host 105, a cache 405, which might be part of a RAID device (*e*.*g*., RAID controller or ROC device, as described in further detail below) and a VD 115. The host 105 submits data 410 to be written to the VD 115. In a write-back mode, data 410 is written to the cache 405 (operation 1), and the cache 405 responds to the host immediately after the data 410 is written to the cash (operation 2). The data 410 is later flushed to the VD 115 (operation 3). Thus, the write-back mode provides confirmation to the host 105 before the data 410 is written to the VD 115. The data rate is faster in write-back mode than in write-through mode, since the cache often is stored in DRAM, which provides much faster IO operations than the physical disks of the VD 115. Write-back mode therefore has low latency and high throughput for write-intensive applications.

Conversely, the term "write-through" means a mode or technique in which the RAID controller does not provide confirmation that the IOs have been completed until after the IOs have been written to the VD 115. An example of the write-through technique is illustrated by Fig. 1B. In Fig. 1B, the system has the same host 105, cache 405, and VD 115. In this case, however, which the host 105 submits data 410 to be written, the data 410 bypasses the cache 405 and is written directly to the VD 115 (operation 1). The host is provided confirmation (operation 2) only after the IOs to write the data 410 have been executed on the VD 115. Fig. 1 C illustrates a slightly different implementation of write-through mode in a VD 115 that employs parity (as required by some RAID levels). In the arrangement of Fig. 1 C, the data 410 might be written to the cache (operation 1) but only for the purposes of calculating parity. The data 410 and the parity information are then flushed to the VD 115 (operation 2). Importantly, however, in write-through mode, the controller does not provide confirmation (operation 3) until after the data (IOs) are written to the VD 115 itself; this is substantially equal in terms of the effect on drive performance and cache bandwidth to the non-parity write-through arrangement of Fig. 1B.

In other words, any caching that might occur for parity purposes does not affect the performance of the write-through disk, which is gauged by the speed of the IO confirmations, which (identical to those of the write-through mode of Fig. 1B), does not occur until after the data 410 has been written to the VD 115. In both the parity and non-parity configurations, write-through mode performance is slower than write-back mode, because the physical disks of the VD 115 are higher latency than the cache in DRAM, thus providing higher latency in returning IO confirmations and resulting in a slower data rate for write operations. As such, all IOs that are performed in write-though mode are described herein as having been "written directly to the VD," regardless of any caching for parity purposes, because that use of the cache does not substantially alter the timing of the write confirmation; one skilled in the art therefore should appreciate that the term "written directly to the VD" includes embodiments in which data might be briefly cached for parity purposes before being actually written to the VD 115.

Thus, write-back mode and write-through mode both provide the host with confirmation that the IO has been executed. Because, however, the operation of writing to a cache takes much less time than writing to the VD 115, a write-back volume generally provides performance at least 50% better than a write-through volume, in terms of the amount of time the host perceives between submitting the IO and receiving confirmation that it has been executed. Virtual disks that require faster data writing operations are configured as write-back, while in situations in which performance requirements can be satisfied with slower data writes, VDs are often configured as write-through.

The use of a write-back policy comes at a cost, which is the performance of all other virtual disks that use the same physical media as the virtual disk with the write-back policy. If a RAID device's cache is dominated by a first VD's write-back policy, it cannot be used (or its use is limited) to manage other VDs. As noted below, ROC clusters can help ameliorate that cost.

### ROC Clusters and Associated Devices

RAID as a technology has no theoretical throughput limitations due to processing or memory requirements. However, processing power and memory bandwidth limitations in the front-end and device management overheads, device IO queue-depth and/or transfer rate limitations in the backend can cause perceptible drops in RAID performance. As the performance and scalability requirements become more demanding with time, this becomes more evident. Various embodiments enable the RAID-specific processing to be performed by a cluster, *e*.*g*., the ROC cluster 100, of RAID devices running in parallel and can offload the task of physical disk management to one or more IOC devices.

Typically RAID controllers do not have a standard way to communicate with each other. Various embodiments, an example of which is the ROC cluster 100, enable ROC devices and other RAID devices in a cluster to communicate with each other over a high-speed bus or network, *e*.*g*., using an intermediary device as described below. Moreover, while typical RAID controller typically might perform data transfer only with backend PDs connected directly to the RAID controller directly or through a switch or an expander, a ROC cluster can allow many-to-many communication among any number of RAID devices (*e*.*g*., ROC devices and/or RAID controllers) and IOC devices. Thus, the PDs need not be connected directly to the RAID devices.

In some embodiments a cluster, such as the ROC cluster 100 of Fig. 1A, allow heterogeneous devices (*e*.*g*., ROC devices, RAID controllers, and/or IOC devices from different manufacturers and/or with different capabilities) to communicate and interoperate in a cluster attached to the same host. For example, ROC devices and IOC devices can work with RAID controllers having both ROC+IOC capabilities in the same cluster. Further, in some embodiments, any RAID device in the cluster can be assigned to manage VDs configured from PDs attached to any of the IOC devices. Thus, certain embodiments can allow assembling a cluster with a custom number of ROC devices and IOCs with different capabilities and from different manufacturers to meet specific customer requirements, allowing customers to choose highly customized solutions for their requirements. Merely by way of example, in a Platform as a Service (PaaS) environment, PaaS solutions can configure a cluster with particular ROC devices, IOC devices, and physical disks to satisfy an end customer's performance and traffic requirements without requiring any physical reconfiguration of hardware connections.

While the maximum number of PDs that can be connected to a host typically is limited by the memory resources of the RAID controller(s) attached to that host, the maximum number of PDs that can be connected to a host through cluster, such as the ROC cluster 100, depends only on the total number of RAID devices (*e*.*g*., ROC devices, RAID controllers) and IOC devices in the cluster. Moreover, while typical RAID systems prevent distributed workload, a RAID cluster in accordance with various embodiments can enable multiple RAID devices to handle workloads in a distributed fashion. In particular embodiments, workloads can be distributed based on flexible criteria. Merely by way of example, a cluster might designate a particular one or more ROC devices in the cluster to manage VDs of a specific device type (*e*.*g*., NVMe), VDs of a specific RAID level, VDs having a specific cache policy, and/or the like.

Thus, while a single chip can impose a performance bottleneck for a typical RAID system, various embodiments can avoid such bottlenecks. Merely by way of example, to support heavy workloads for 64 VDs connected to one RAID controller, rather than dividing both processing cycles and memory of a single RAID controller divided among the 64 VDs, a cluster of 8 ROC devices can divide workload of the 64 VDs, in whatever proportions are appropriate, among the 8 ROC devices, *e*.*g*., with each ROC device handling 8 VDs each. This can provide each VD gets a higher share of processing cycles and memory, enhancing performance of each VD.

Further, while parallel processing of RAID operations typically is limited and expensive on a single RAID controller, *e*.*g*., by increasing the number of threads performing the same task in each hardware unit in the controller, using costly high-performance memory modules, etc., a cluster in accordance with various embodiments can enable multiple ROC devices to run in parallel with workloads for multiple VDs divided among the ROC devices. In such embodiments, even minor hardware optimizations can be multiplied by the number of ROC devices in the cluster to deliver significantly better cumulative performance. Moreover, certain embodiments can provide fault tolerance and prevent single point of failure scenarios. For example, even if all the devices managed by an IOC device fails, only the ROC devices managing the VDs configured with those drives are affected. The rest of the IOC devices and ROC devices can run uninterrupted.

A cluster, such as ROC cluster 100, can also provide more robust write-back and write-through solutions and/or allow for better coexistence of write-back VDs with each other and/or write-through VDs. As noted above, a VD with a write-back policy can degrade performance of other VDs managed by the same RAID device by consuming the cache of that RAID device. In a ROC cluster 100, however, *e*.*g*., as described in further detail below, VDs can be managed separately by different RAID devices, such as different ROC devices or RAID controllers within the cluster, which can allow, for instance, a dedicated ROC device with a large cache memory to manage a large VD with a write-back policy, while one or more other ROC devices can manage other VDs, so that the management of the write-back VD does not impose a performance penalty on the other VDs. Management by a primary ROC device can also help to select and appropriate RAID device to manage a write-through VD, as described in further detail below.

Returning specifically to Fig. 1A, the ROC cluster 100 is in communication with a host system 105, which might be a computer running a host application 110. The host application 110 can be any application that interfaces with the cluster 100, including without limitation an operating system of the host computer 105. Depending on context, this disclosure uses the term "host" and the reference numeral 105 to refer to a host computer 105, a host application 110, or more commonly both. From the perspective of the cluster, the host computer 105 and the host application generally can be considered synonymous *e*.*g*., as a source of data to be stored or a sink of data to be read, and/or as a source of commands to be executed by various components of the cluster 100. As described in further detail below, the host application 110 communicates with the cluster 100, and/or various components thereof, to access one or more VDs 115, which are shown by broken lines as part of the host 105 but which actually are provided by the cluster 100 as described in more detail below.

In some embodiments, the host application 110 might be a specific application, or might be a component or service of a specific application, such as a hypervisor in a virtualized computing environment. Merely by way of example, Fig. 1B illustrates a configuration in which the host computer 105' provides a virtualized computing environment. In the illustrated embodiment, a hypervisor (and/or a service or component thereof, such as a distributed storage controller service) or a virtual machine (VM) can as the host application 110' and/or serve to provide virtualized hardware for a plurality of VMs 155. Each of the VMs 155 might have access, as permitted, to resources in the cluster 100. In Fig. 1B, the details of the ROC cluster 100' have been omitted in the interest of simplicity; in some embodiments ROC cluster 100' might have components similar to those of the cluster 100 of Fig. 1A in various embodiments. In the configuration illustrated by Fig. 1B, each of the VMs 155 has access to one of the VDs 115, although other configurations are possible, *e*.*g*., configurations in which multiple VMs 155 have access to some or all of the VDs 115, configurations in which a single VM 155 has access to multiple VDs 115, configurations in which multiple VMs 155 share a single VM 115, and/or the like. In set of embodiments, a configuration similar to the configuration of Fig. 1B can act as a software-defined data center (SDDC), a hyperconverged infrastructure (HCl), and/or the like. Such a configuration can also be used by a service provider to provide PaaS or similar services. In providing such services, a single ROC cluster 100 (and/or a plurality of such clusters) can be used to provide storage services for multiple customers. In some embodiments, each customer accesses one or more VDs 115 dedicated to that customer, *e*.*g*., through one or more VMs 115. In an aspect, each of the VMs 155 can include its own guest operating system that provides access to the VDs 115 for applications running in the VM.

In an aspect, a VM running on a hypervisor can be considered hardware-level virtualization. Containerized environments, such as Docker^{®} container or other type of container, which might be managed as part of a Kubernetes^{®} container orchestration system or other type of orchestrator, are examples of operating system-level virtualization. Each of these is a non-limiting example of a virtualized computing instance (VCI), any of which can employ one or more VDs 115 supported or managed by ROC clusters (and/or members thereof) in accordance with various embodiments. As such, instead of each VCI being a VM 155, each VCI might instead be a container, and instead of a hypervisor, the host application 110 might be an orchestrator. In some embodiments, each container might run in a VM 155, and/or the orchestrator might run in a VM 155, in which case the orchestrator, the hypervisor, or both could serve as the host application 110.

It should be appreciated that the configuration of Fig. 1B, as well as the configuration of Fig. 1A, can be scaled as needed, *e*.*g*., to include multiple hosts 105, multiple clusters 100, etc. In an aspect of some embodiments, there might be a 1:1 ratio of hosts 105 to clusters 100 such that each cluster 100 serves one host 105. Other embodiments might have different configurations.

Returning to Fig. 1A, the host computer 105 can include one or more interfaces (not shown in Fig. 1A), *e.g.,* a PCIe interface, that provides communication with the cluster 100 through an intermediary device 120. The intermediary device 120 can be any device able to provide communication between the host 105 and one or more devices of the cluster 100, such as, for example ROC devices 125, IOC devices 130, RAID controllers (not illustrated by Fig. 1A), and/or the like. In some embodiments, the intermediary device might be a PCIe hub or switch, a network fabric or switch, and/or the like. Merely by way of example, in some embodiments, the intermediary device will include a plurality of ports, such as PCle ports to name one example and one or more ROC devices 125 IOC devices 130, etc. can be plugged into such ports.

For ease of description, the ROC cluster 100 of Fig. 1A is described herein as including a plurality of IOC devices 130 and an intermediary device 120; it should be appreciated that not every embodiment of an ROC cluster 130 might include such IOCs 130. Merely by way of example, some embodiments might include one or more ROC devices 125, which can communicate with various IOC devices 130, *e.g.,* via the intermediary device(s) 120; in that sense, the IOC devices 130 but the IOC devices 130, which in some cases might not have any processing capabilities other than the minimal processing required to receive/send data and/or write/read that data to disk, might not be considered part of the ROC cluster 100 on a logical basis. Likewise, while the intermediary device 120 might be the physical hub of the ROC cluster, the intermediary device 120 might not be considered a logical portion of the ROC cluster either. In other embodiments, however, the IOC device(s) 130 and intermediary device(s) 120 might be considered part of the ROC cluster 100 from another perspective and/or in other embodiments. In various embodiments, an ROC cluster 100 can be any group of two or more ROC devices 125 (and/or RAID devices) that can support a primary ROC device 125 and/or exhibit functionality as described herein.

The ROC cluster 100 of Fig. 1A includes three ROC devices 125, three IOC devices 130, and a single RAID controller 135. Each of the ROC devices 125 manages one or more virtual disks 115, each of which is implemented with one or more arms comprising storage from one or more physical disks 140, *e.g.,* as described above. For example, in the illustrated embodiment, ROC device 125a manages VD1 115a, which includes two arms, one comprising storage from PD2 140b and one comprising storage from PD3 140c. As noted above, a ROC device 125, such as ROC device 123a, generally does not have the IOC capabilities of an IOC device 130 or RAID controller 135. Consequently, in some embodiments, ROC device 125a has no direct physical connection with the arms on the PDs 140b, 140c. Instead, those PDs 140b, 140c are managed by IOC device 130a, which handles the drive IOs one the PDs 140b, 140c. Thus, in order to read or write to VD1 115a, the ROC device 125a communicates with the IOC device 130a, *e.g.,* as described herein, and the IOC device 130a performs the disk operations on the PDs 140b, 140c necessary to accomplish the read or write operation.

Similarly, a second ROC device 125b manages VD2 115b, VD3 115c, which have arms on PD9 140i and PD11 140k, and PD7 140 g and PD8 140h, respectively, as shown on Fig. 1A. To manage those VDs VD 115b, VD 115c, including without limitation performing drive IOs, the ROC device 125b communicates with the appropriate IOC devices 130a-b, 130c as needed. In some embodiments, a single VD 115 can include arms from PDs 140 managed by multiple IOC devices 130. Merely by way of example, VD2 115b includes arms from PD9 140j, which is managed by IOC device 130b (through expander 150a), and PD11 140k, which is managed by IOC device 130c (through expander 150b). Thus, based on the IO to be performed (*e*.*g*., data to be read from or written to) on VD2 115b, the ROC device 125b might communicate with IOC device 130b and/or IOC device 130c, depending on which PD 140 holds the data to be read/written. (It will be appreciated that, in many cases, data to be read/written is sufficiently large to occupy blocks across multiple arms, in which case the ROC device 125b will need to communicate with both IOC device 130b and IOC device 130c to perform the IO operation.) This example further illustrates that an IOC device 130 often will include a connection with a switch, e.g., NVMe switch 145, and/or a hub/expander, e.g., SSD/HDD expander 150) in order to manage more physical disks than the IOC device's 130 own communication interface(s) support.

Likewise, a single IOC device 130 might manage PDs 140 that serve as arms for different VDs 115; such VDs 115 might be managed by different ROC devices 125. For example, IOC device 130b manages PD5 140e and PD6 140f, which serve as arms for VD4 115d, which is managed by ROC device 125c. The same IOC device 130 also manages PD7 140g and PD8 140h, which serve as arms for VD3 115c, which is managed by ROC device 125b. As shown by these examples, various embodiments enable multiple combinations of ROC devices 125 and IOC devices 130 to communicate to allow ROC devices 125 to manage VDs 115 in various combinations. This can allow embodiments to provide a high degree of flexibility in to use available hardware optimally to provide VDs 115 for the host 105 according to implementation-specific criteria.

In the illustrated embodiment, ROC cluster 100 also includes a RAID controller 135. As noted above and described in further detail below, the RAID controller 135 can include both RAID-specific features and IOC features. As such, RAID controller 135 can be capable of managing a VD 115, such as VD5 115e, and PDs 140, such as PD12 140 m and PD13, 140n. In this sense, RAID controller 135 can be similar to a typical RAID controller; in some embodiments, however, the RAID controller 135 can include hardware and/or other logic to perform as a member of the ROC cluster 100. Merely by way of example, RAID controller 135 might have logic to cause it to perform as a primary RAID device (*e*.*g*., performing the operations of a primary ROC device as described herein) and/or as a secondary RAID device, *e*.*g*., as described further herein.

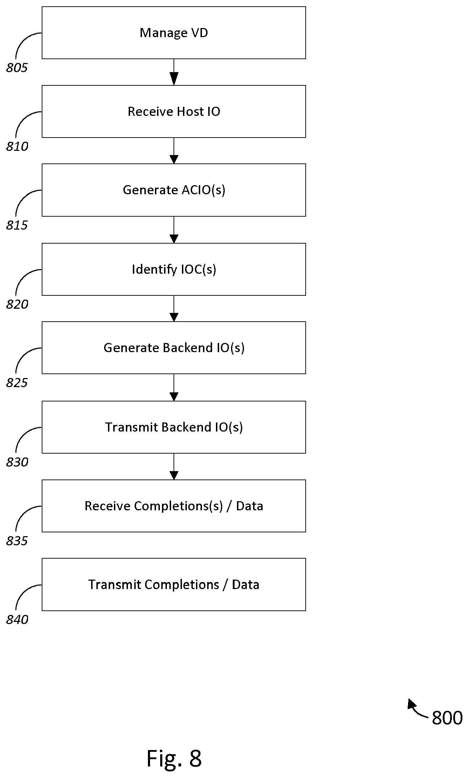

For example, in the embodiments illustrated by Fig. 1A, ROC device 125a is a primary ROC device, which, in some embodiments, manages the cluster 100 and/or handles communications between the host 105 and other members of ROC cluster 100. Managing the cluster 100 can involve any of several operations, some of which are described in more detail below in the context of Figs. 8-15. In some embodiments any other ROC device 125 or even RAID controller 135 could be configured to act as the primary ROC device for the ROC cluster 100. For example, in some embodiments, if the primary ROC device 125a were to suffer a failure, the other ROC device 125 and/or RAID controller 135 (which collectively can be considered "RAID devices," as noted above) might be configured to select another RAID device in the ROC cluster 100 to act as the primary ROC device for the cluster, and/or the host 105 (or host application 110) might comprise software instructions to select another primary ROC device for the ROC cluster 100. While this description generally refers to such operations being performed by a primary ROC device 125, the reader should understand that an appropriately configured ROC device 125 could perform the same operations.

In some embodiments, the various devices, *e*.*g*., intermediary devices, 120, ROC devices 125, IOC devices 130, RAID controllers 135, etc. (collectively, "devices" or "members" of the ROC cluster 100) can communicate within the ROC cluster 100 using proprietary messages and/or protocols. In other embodiments, the members can communicate using standard protocols and/or messages. Merely by way of example, in some embodiments, the intermediary device 120 might comprise a PCIe hub and/or might implement a high-speed, bus that provides peer-to-peer communications among the various members in the ROC cluster 100 as needed. For example, in some embodiments these members can engage in "backend" communication on a peer-to-peer basis without requiring the host 105 to be involved in any such communication. In other words, the communication between and among the members of the ROC cluster 100 can be separate from the host 105. This can reduce workload and IO traffic on the host 105 and provide for more efficient communication within the ROC cluster 100. Merely by way of example, the members of the ROC cluster 100 might communicate over a logical PCle bus (or any other topology) using PCIe vendor-defined messages (VDM). In accordance with other embodiments, any other appropriate communication media or protocols can be used.

While Fig. 1A illustrates only one intermediary device, 120, it should be appreciated that in some embodiments, a ROC cluster 100 might feature multiple intermediary devices, 120, which could be arranged in any appropriate topology, such as a bus, a daisy chain, a star, mesh, and/or the like. Some embodiments might not include an intermediary device 120. In some embodiments, any type and/or number of purpose-built devices or general-purpose computer can serve as an intermediary device 120, so long as such a purpose-built device or general-purpose computer can provide necessary communication between various devices of the cluster 100 and/or between the host 105 and one or more members of the cluster, such as a primary ROC 125a. From this disclosure, one should appreciate that Fig. 1A is exemplary in nature and that various embodiments of the invention are not limited to any particular topology and/or architecture. A ROC cluster can function in a number of different ways, and while exemplary modes of functionality of a ROC cluster and/or its components are described in further detail below, the scope of various embodiments is not limited to any particular disclosed functionality.

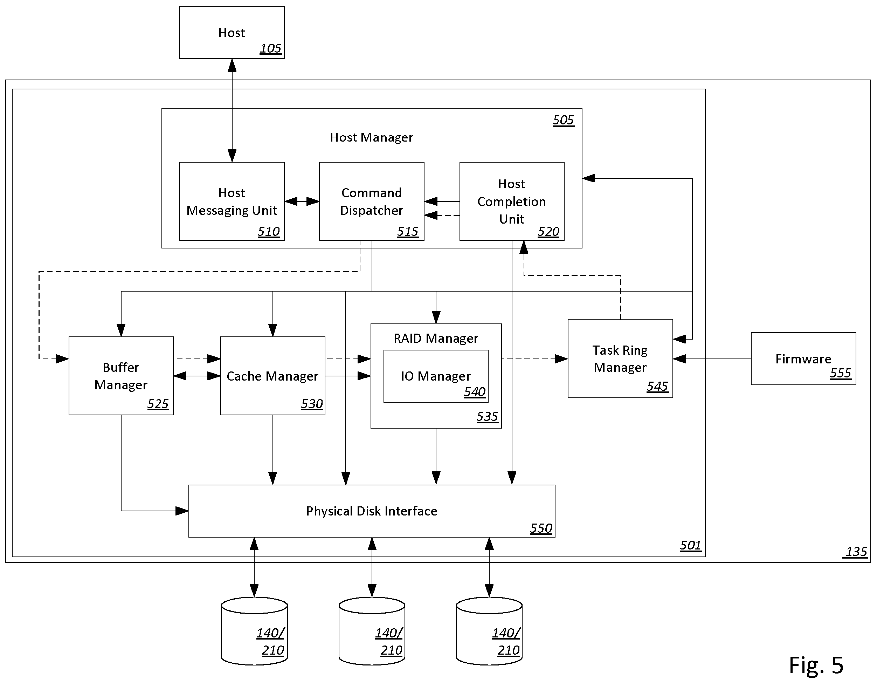

Fig. 5 illustrates an exemplary architecture for a RAID controller 135 that can be used in various embodiments. As noted above and described in further detail below, the functionality and/or components of a RAID controller 135 can be divided between IOC functionality and RAID-specific functionality. In some embodiments, however, such functionality and/or components can be integrated in a RAID controller 135 that is configured to serve as a member of a ROC cluster 100. In such cases, as noted above, the RAID controller 135 can include hardware and/or other logic to enable it to serve as a ROC device 125, an IOC device 130, or both. For example, as described

In an aspect, the RAID controller 135 comprises a set of hardware circuitry 501 (also referred to herein as simply "hardware"). This hardware circuitry 501 comprises several hardware components, each of which is encoded with circuitry to cause that component and/or the RAID controller 135 generally to perform, *inter alia,* the functions and procedures disclosed herein. The hardware circuitry 501 can comprise, without limitation, a host manager 505. The host manager 505 includes a host messaging unit (HMU) 510, a command dispatcher unit (CDU) 515, and a host completion unit (HCU) 520. The hardware circuitry 501 further comprises, in some embodiments, a buffer manager 525 and/or a cache manager 530. The hardware circuitry 501 can further comprise a RAID manager 535, which can include an IO manager 540, as well as a task ring manager 545, and/or a physical disk interface 550.

It should be noted that the RAID controller 135 illustrated in Fig. 5 is merely exemplary in nature, and many embodiments can comprise more, fewer, or different hardware components. In certain embodiments, each component of the hardware circuitry 501 performs discrete functions or tasks. In other embodiments, the hardware circuitry 501 can be considered to perform such tasks collectively, and/or the same or different components might perform other discrete tasks. Hence, embodiments of RAID controllers or RAID devices are not limited to the structure disclosed in Fig. 5 unless explicitly stated; moreover, to the extent that an embodiment states that "hardware circuitry" itself performs a particular task, such an embodiment does not require any particular hardware component to perform that task.

In some embodiments, the RAID controller 135 further comprises firmware 555, which, unlike the hardware circuitry 501, often includes instructions that can be executed by a processor, such as a microprocessor. The firmware 555 might generally comprise instructions stored on a persistent form of data storage, such as a programmable read only memory (PROM) or one of several derivatives, nonvolatile RAM, programmable logic devices (PLD), field-programmable gate arrays (FPGA) and/or the like. The firmware 555 can be more adaptable and/or updateable (in some cases) than the hardware circuitry 501 and/or can perform more complex tasks. Often, however, the cost of this complexity and/or flexibility is speed. Each component of hardware circuitry 501 generally is optimized to perform one (or a few) relatively simple tasks, but to do so very quickly. In contrast, as described herein, some embodiments execute firmware instructions to perform more complex tasks, like storing diverted host IOs, calculating and allocating buffer segments, and performing maintenance tasks. In each of these cases, the tasks of the firmware 555 can include providing instructions to the hardware circuitry 501. (As described further below, the term "logic" is used broadly herein to refer, without limitation, to instructions stored and/or performed by hardware circuitry, firmware, software, and/or a processor.)

In the illustrated embodiment, the HMU 510 provides communication between a host 360 and the RAID controller 135 (and/or components thereof), for example receiving host IOs from the host and providing IO completion confirmations to the host. As used herein, the terms "complete," "completion" and "completion message" mean a notification to the host or another component that an operation (*e*.*g*., an IO) has reached a particular status. In many cases, the entity (*e*.*g*., host, component, etc.) that receives the completion message for an operation is the entity that requested or commanded the operation. A completion message need not indicate that a requested operation has been successfully completed, or necessarily that the requested operation has been concluded at all. For example, as described in further detail below, in some cases, a completion message might indicate that a particular operation (*e*.*g*., prefetching) will be completed at a later time (*e*.*g*., in the case of an immediate prefetch request) or that the operation cannot be completed.

The CDU 515 provides several control features for the RAID controller 135. For example, the CDU 515 can receive IOs, *e*.*g*. from the HMU 510, the firmware 555, etc. and, based on those requests, dispatch IO commands for execution (*e*.*g*., direct or transmit IOs to other components to be executed). Some embodiments feature a VD property table (VDPT). In some embodiments, the VDPT is stored in and/or and maintained by the CDU 515. In some embodiments, the VDPT includes a VDPT element for each VD configured in the system. In some embodiments, the VDPT stores a device handle for every VD in the system; this device handle can be a unique identifier of each VD.

As noted above, the term "IO" is used generally to mean any input-output operation on a VD (and/or the underlying media), and/or a request or command to perform such an operation. Such operations can include, without limitation, read operations and write operations. In some cases, specific types of IO are mentioned herein where appropriate. While the term "IO" generally can mean a "read IO" (in which data is read from data source, such as a cache, VD, etc.) or a write "write" IO" (in which data is written to a data sink, such as a cache, VD, etc.), the present disclosure generally is directed to read operations; thus, unless the context dictates otherwise, the term "IO" as used herein, is meant to be sufficiently broad to include with "read IO."

Regarding the specific types of IOs, the actual read or write operations on the physical disks of the VD are referred to as "drive IOs." An IO communicated between different components of a ROC cluster (*e*.*g*., between a ROC device and an IOC device) can be described as "backend IOs." Likewise, the terms "execute," "perform," "read," and "write" (and their derivatives) are used synonymously herein with regard to IOs, and they refer not only to the actual reading of data from disk or writing of data to disk, but any other action that is performed along the path from receiving an IO from a host to writing an IO to a physical disk. Drive IOs are the only input-output operations actually executed on the physical media (*e*.*g*., reading data from or writing data to disk); all other types of IOs are actually requests or commands (at various levels of abstraction) to perform one or more drive IOs. Thus, the term "IO," when used without modifiers, can refer to both the actual drive IO and/or any other IO (*e*.*g*., requests or commands to perform actions that will result in one or more drive IOs), including without limitation all such IOs described herein.

For instance, one type of IO is a request from a host 105 for data to be read from or written to a VD; this type of IO is referred to as a "host IO." A host IO, in some embodiments, comprises a request to read or write data to a particular VD; this requested data might be of various sized blocks or amounts of LBAs, and often will need to be divided by the RAID controller 135 for processing and/or for more efficient internal communication.

As described in further detail below, the RAID controller 135 itself can employ "accelerated IOs," (ACIO) which are internal communications within the device. As used herein, when a component is described as "transmitting," "directing," or executing" or "writing" a host IO, an ACIO, or an IO in general, those terms are meant to include, without limitation, the transmission, direction, execution, reading, writing, etc. of an ACIO that has been generated from a host IO. In some embodiments, each host IO, as well as each ACIO, each backend IO, and/or each drive IO can be assigned a unique IO identifier; this identifier can be used in completion messages to indicate that the IO referenced by the identifier has been performed (at whatever level applicable).

In some embodiments, ACIOs can include parent ACIOs. One type of parent ACIO is generated by a component of the hardware 501 (*e*.*g*., CDU 515) after the hardware 501 has received a host IO and determined that it should be executed at that time (rather than diverted). The host IO might have been received directly from the host or might have been diverted earlier and then resubmitted for execution, *e*.*g*., by the firmware 555. In some cases, the host IO might comprise a request for sufficient data reads/writes that it can be divided into different IOs (*e*.*g*., for parallel execution); in this case, the parent ACIO might be used to generate one or more child ACIOs, which are more granular requests for particular read/write operations on the VD, and which can be performed by different threads in parallel, in accordance with some embodiments. In other cases, the parent ACIO is not used to generate any child IOs, and the parent ACIO can itself serve to accomplish the full request of the host IO. The parent ACIO (or, in appropriate cases the child ACIOs generated from the parent ACIO) then can be used to generate the drive IOs, which actually perform the read/write operations on the media of each PD. In some cases, a parent ACIO or child ACIO will be divided into a plurality of drive IOs, if the parent or child ACIO, for example, requires reads/writes to multiple arms, because each drive IO might be directed to a single arm (PD). As noted herein, if the device performing the drive IO is not the same as the device that generated the ACIO, the device that generated the ACIO might, instead of or in addition generating a drive IO, generate a backend IO that can be transmitted to another device to be performed on the actual PD to which it is directed.

The HCU 520 is the endpoint for host IOs and receives notice, *e*.*g.*, from the firmware 555, the cache manager 530, the IO manager 540, and/or any other hardware 501, when host IOs have been completed (*e*.*g*., completion confirmations). The HCU 520, in some embodiments, can provide such notice to the CDU 515, which can determine what, if any, additional actions should be taken with regard to a completed IO (*e*.*g*., notifying a host of the completion). In some embodiments, the buffer manager 525 handles interactions with buffer memory. In some embodiments, in which caching is employed for a VD, the cache manager 530 handles the caching of IOs prior to writing those IOs to disk. In some embodiments, for example, the cache manager 530 is responsible for performing IOs on a cache (not shown in Fig. 5), which, as described herein, can provide better performance for the host 360 than writing IOs to the VD (*i.e.,* the arms 210 on the physical disks 150). The cache manager 530 can also be responsible for flushing IOs stored in the cache to the VD when appropriate. In general, the cache 360 is a set of reserved memory (*e*.*g*., DRAM) that can be used to hold IO data temporarily rather than writing the IOs directly to the VD.

In a RAID controller such as the RAID controller 135, the RAID manager 535 handles most interactions between the RAID controller 135 and the physical disks 210 (arms 140). In particular embodiments, the RAID manager 535 comprises the IO manager 540, which handles low-level interaction with the physical disks 150, including the creation of drive IOs to instruct the physical disks 150 to execute the actual reads and writes on the physical media of the disks 150. This interaction is provided through the physical disk interface 550, which provides direct, low-level access to communicate drive-level instructions, such as drive IOs, to the physical disks. The physical disk interface 550 can comprise one or more network interface cards or other communication cards or ports to communicate with the physical disks 210 over a network such as a storage area network (SAN), and/or via other connections, such as serial attached small computer system interface (serial attached SCSI or SAS) connections, NVMe connections, fibre channel connections, and/or the like.

The task ring manager 545 manages a task ring (shown by broken lines in Fig. 5), which provides high-speed communications between the various components of the RAID controller 135, including the firmware 555 and the various components of the hardware 501. In a particular embodiment, the task ring carries messages (task ring messages or TRM) that are local to the RAID controller 135 and are used for a variety of purposes while the RAID controller 135 is operating. In an aspect, some TRMs can have a local message index (LMID) field or frame that can hold an ACIO and/or a reference to an ACIO. In another aspect, each ACIO is transmitted in its own TRM. The transmission of ACIOs by TRM provides for enhanced performance in the processing of IOs. For example, a host IO generally is transmitted using a standard message passing interface (MPI) message, which provides relatively slow communications compared to the task ring. This MPI message can be received by the hardware 501 (*e*.*g*., the CDU 515), which can create a new parent ACIO from the host IO, if the hardware 501 determines that the host IO should be executed; if not, the hardware 501 (or a component thereof) can copy the data from the host IO into an LMID for diversion to the firmware 555 over the task ring. As noted above, in some cases, the CDU 515 (or another component) might generate child IOs from the parent IO, in which the IO data and other parameters from the parent ACIO might be shared and/or divided among the child ACIOs, for example as described in further detail below. The parent ACIO and/or child ACIOs can then be transmitted to other components for execution, *e*.*g*., as described below.

While Fig. 5 illustrates RAID controller 135 as including a physical disk interface 550, the RAID controller 135 might also have a backend IO interface and/or an interface to communicate with other members of the ROC cluster 100, neither of which is shown on Fig. 5. As noted below, each of those interfaces can be incorporated in a single physical interface, such as a PCIe interface, a network interface, and/or the like. In some embodiments, including without limitation those in which the RAID controller 135 includes such interfaces, the RAID controller 135 can operate as a ROC device 125 (*e.g.,* to issue instructions or backend IOs to another IOC device 130), as an IOC device 130 itself (*e*.*g*., to receive instructions or backend IOs from a ROC device 125), and/or both.

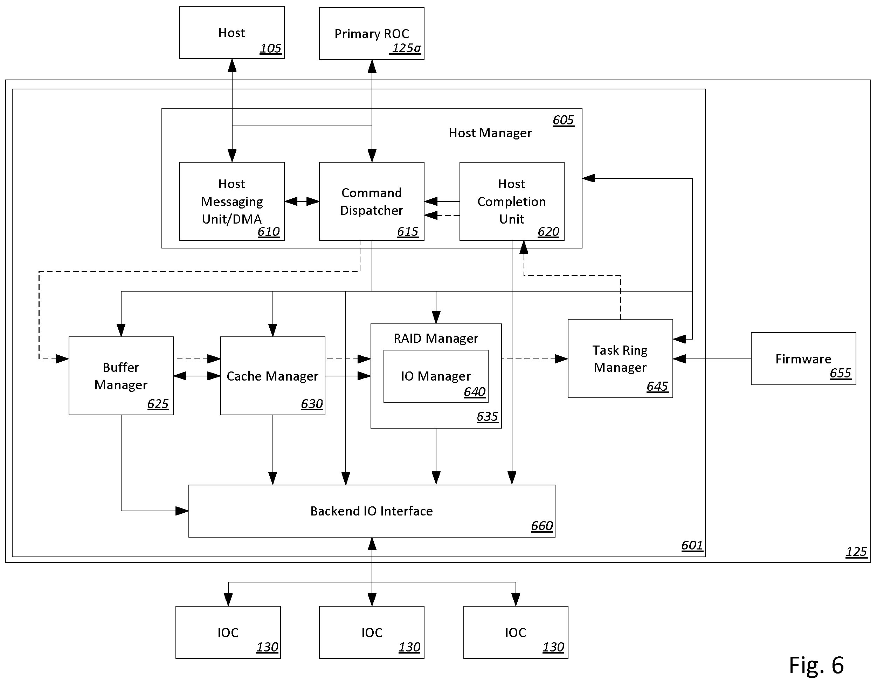

Fig. 6 illustrates a ROC device 125 in accordance with some embodiments. As noted above, a ROC device 125 can provide some or all of the RAID-specific functionality of a RAID controller without IOC functionality. The ROC device 125 of Fig. 6, in some embodiments, includes one or more components 601-645 and 655 with similar features and/or functionality to the respective components 501-545 and 555 of the exemplary RAID controller 135 of Fig. 5. In other embodiments, a ROC device 125 might have more or fewer components, and/or some or all components might be different than those of the RAID controller 135.

As noted above, a ROC device generally does not include the IOC functionality of a RAID controller, however. Thus, the exemplary ROC device 125 of Fig. 6 lacks a physical disk interface. Instead, the ROC device 20 includes a backend IO interface 660, which provides communication with one or more other devices within a ROC cluster, such as one or more IOC devices 130. In an embodiment, a ROC device 125 can receive host IOs from a host 105 (*e*.*g*., via an HMU and/or DMA interface 610) and/or from another ROC device, such as a primary ROC device 125 (*e*.*g*., via a CDU 615, an HMU 610, and/or a component with similar functionality) and/or generate ACIO(s) from the host IO (*e.g.,* in similar fashion to a RAID controller).

Instead of, or in addition to, generating drive IOs from the ACIOs, however, the ROC device 120 can include a backend IO interface that generates backend IOs from the ACIOs. As described further below, in an aspect, a backend IO can comprise one or more drive IOs, and/or can include information from which one or more drive IOs can be generated. In some embodiments, a backend IO interface 660 can include logic to produce the backend IOs. Merely by way of example, in some embodiments, an IO manager 640, and/or another component, such as a RAID manager 635, might generate drive IOs and pass those drive IOs to the backend IO interface 660. The backend IO interface 660 might generate one or more backend IOs, which, as noted above, can include (but need not in every embodiment include) the drive IOs. In some embodiments, the backend IO interface 560 can prepare the backend IOs for transmission to one or more other members of the ROC cluster 100, such as one or more IOC devices 130. Merely by way of example, in some embodiments, the backend IO interface 660 might encapsulate one or more backend IOs into a PCIe vendor-defined message (VDM), which can be transmitted over an appropriate interface (*e*.*g*., a PCIe interface) using standard techniques, *e*.*g*., through an appropriate intermediary device 120, to one or more IOC devices 130.

It should be appreciated that, while Fig. 6 conceptually illustrates three IO connections (to a host 105, a primary ROC device 125a, and IOC device 130), a ROC device often will have a single communication interface, *e*.*g*., a PCIe interface (not shown on Fig. 6), which provides communication with all devices in the cluster and/or the host 100, *e*.*g*., through an intermediary device such as the intermediary device 120 of Fig. 1A. In some cases, using this interface (or another), the ROC device 125 might be capable of communicating directly with a host 105, *e.g.,* by direct memory access (DMA), which can enable the ROC device 125, for example, to get data from or put data into the host's memory, such data might include, in some embodiments, data stored in a cache (not shown) of the ROC device 125 and/or managed by the cache manager 630, which is responsive to a host read IO received by the ROC device 125, either directly or from a primary ROC device 125a. As noted above, in addition to the interfaces shown in Fig. 5, a RAID controller 135 in accordance with some embodiments can feature the same or similar communication interfaces and functionality as the ROC device 125 of Fig. 6, allowing the RAID controller 135 to participate as a member in the ROC cluster 100 and perform operations as described in further detail herein.

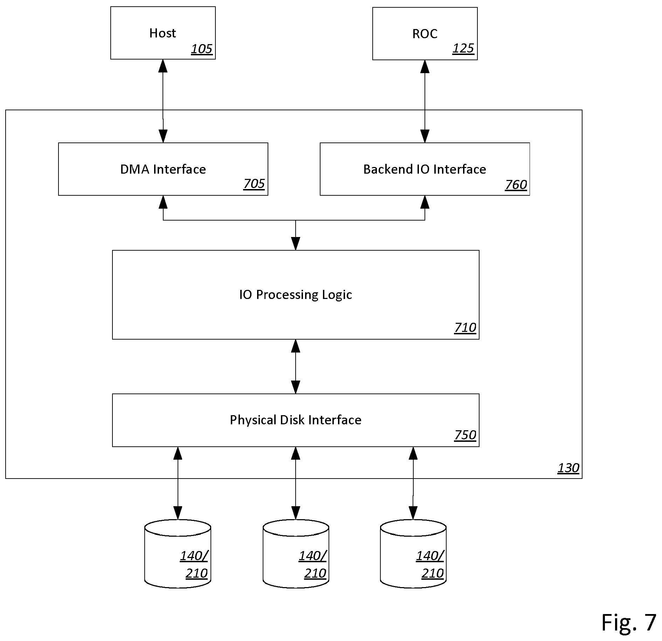

Fig. 7 illustrates an exemplary IOC device 130 in accordance with some embodiments. The IOC device 130 can include interfaces to communicate with various entities, such as a DMA interface 705, a physical disk interface 750, and/or a backend IO interface 760. The physical disk interface 750 might function in similar fashion to the physical disk interface 550 described above in the context of Fig. 6., *e.g.,* to perform drive IOs on the disks 210 managed by the IOC device 130. The backend IO interface 760 might function in similar fashion to the backend IO interface 660 illustrated in Fig. 6, *e.g.,* to receive backend IOs from, and to transmit backend IOs to, one or more ROC devices 125. Each of the DMA interface 705 and the backend IO interface 760 might be incorporated within a single physical interface, *e*.*g*., a PCIe interface, a network interface, and/or the like. The physical disk interface 750 might use the same physical interface as well, and/or it might be implemented by one or more physical interfaces corresponding to those of the physical disks 140 (*e.g.,* as described above in the context of the physical disk interface 550 of the RAID controller 135).

The DMA interface 705 of the IOC device 130 might operate similarly to that of the ROC device 125, to enable the IOC device 130 to exchange data directly with the host 105. For example, if the IOC device 130 were to receive (*e*.*g*., from a ROC device 125), a host write IO, the IOC device 130 might use the DMA interface 705 to obtain, from the memory of the host 105, data to be written to one of the physical disks 140. Conversely, if the IOC device 130 were to receive a host read IO, the IOC device 130 could place the data read from the disks 140 directly into the memory of the host 105. In either case, the IOC device 130, as described further below, might send a completion message to the source of the host IO (*e.g.,* the ROC device 125 responsible for managing the VD that has an arm 210 comprising storage from one of the disks 240) managed by the IOC device 130.

The IOC device 130 might further include logic 710 to enable the IOC device 130 to process backend IOs and/or DMA data to generate, identify, derive, or otherwise determine the necessary drive IOs to perform on the disks 140 in order to accomplish the data exchange specified by the backend IOs received by the IOC device 130. As noted above, in some cases, a ROC device 125 will generate a backend IO that includes drive IOs. In other cases, the generation of the drive IOs themselves might be left to the IO processing logic 710 of the IOC device 130, which, in such cases, can read a host IO, determine from the contents of the backend IO what data needs to be exchanged with the disks 140, and/or generate the drive IOs for each disk 140 necessary to perform the backend IO. These drive IOs can be sent to the physical disk interface 150, which then performs the drive IOs on the appropriate disk(s) 140 to exchange (*e*.*g*., read or write) the data with the disk(s) 140. For example, if the backend IO is a read IO, the IO processing logic 710 can issue disk read IO(s) to the physical disk(s) 140 and process the data read from the disks 140 as specified by the backend IO (*i*.*e*., return the data in a completion backend IO to the ROC device 125, provide the data to the host 105 via DMA, etc.). If the backend IO is a write IO, the logic 710 can obtain the data (*e*.*g*., from the backend IO itself, from the host 105 via DMA, etc.), generate drive IO(s) if necessary, and then cause the physical disk interface 750 to perform those IOs on the appropriate physical disk(s) 140 to write the data as instructed. The IO processing logic 710 can then generate a completion message and/or cause the backend IO interface 760 to transmit the completion message to the ROC device 125, which, in response, can send the completion message (or different completion messages) to a primary ROC device 125, which, in response, can send the completion message (or another different completion message) to the host 105, indicating that the host IO has been performed. In the case of a host read IO in which IOC device 130 did not use DMA to return the data to the host, the completion message(s) can include the data read from the physical drives 140.

Each of the ROC device 125, IOC device 130, and/or RAID controller 135 can operate in any number of ways. The description below describes the operation of those devices in accordance with some embodiments, but other embodiments of such devices are not limited to any particular mode of operation.

### Communication Routes

Returning to Fig. 1A, if the ROC 125 of Fig. 6 were to take the role of a secondary ROC device, *e*.*g*., ROC device 125b (which manages VDs 115b and 115c), the ROC device 125b might communicate (*e*.*g*., via such a communication interface) with a primary ROC device 125a and IOC devices 130a and IOC 130b in order to manage the VDs 115b (which uses storage on physical disks 140b and 140c as arms) and 115c (which uses storage on physical disks 140 g and 140h as arms), respectively. The nature of such communications is described in further detail below, but in an exemplary case, the ROC device 125b (which can be considered a secondary RAID device or a secondary ROC device, as described herein) might receive configuration instructions from the primary ROC device 125a to create the virtual disks 115b and 115c and/or might communicate with IOC devices 130a and 130b to instruct those IOC devices to create the VDs 115b and 115c. After the VDs 115b and 115c have been created, the primary ROC device 125a might receive a host IO directed to VD 115a, determine that the ROC device 125b manages VD 115a, encapsulate the host IO in a VDM, and/or forward the host IO to the ROC device 125b. The ROC device 125b might process the host IO to generate one or more ACIOs (*e.g.,* as described above with respect to Fig. 4) and from there, generate one or more backend IOs. The ROC device 125b then might encapsulate the backend IO(s) into one or more VDMs, and transmit the VDMs, e.g., through intermediary device 120, to the IOC device 130a. The IOC device 130 might perform drive IOs corresponding to the backend IO(s), *e.g.,* as described above, and return any data read and/or a completion message, *e*.*g*., as described above. A similar process might be followed for host IOs directed to any of VDs VD 115a-VD 115d, involving the appropriate ROC device and IOC device(s).

If the primary ROC device 125a receives a host IO directed VD5 VD 115e, however, the process might be different. In that case the primary ROC device 125a could encapsulate the host IO as a VDM and transmit it to the RAID controller 135. Upon receiving the host IO, the RAID controller 135 might process the host IO to generate ACIOs, and from those ACIOs, generate drive IOs. Those drive IOs could be performed by the physical disk interface 450 of the RAID controller 135 directly on the attached physical drive(s) 140m-140n, and the RAID controller 135 then could send the completion message and/or any data read from the drive(s) 140m-140n to the primary ROC device 125a, *e*.*g*., as described above. In this sense, the RAID controller 135 can integrate the performance of a ROC device 125 and an IOC device 130 if managing a VD 115e with arms on physical disks 140m-140n attached to the RAID controller 135 itself.

Although not shown on Fig. 1A, in some embodiments, the RAID controller 135 might manage a VD 115 that has arms on physical disks 140 not directly attached. In that case, the RAID controller 135 could function as a ROC device 125 to send backend IOs to another IOC device 130 that managed the physical disks 140 for that VD 115. Conversely, if the RAID controller 135 had attached physical disks 140 that served as arms for a VD 115 not managed by the RAID controller 135, it could function as an IOC device 130 to receive a backend IO from a ROC device 125 and perform the drive IOs necessary to satisfy that backend IO.

### Exemplary ROC Cluster Operation and Management

In some embodiments, during discovery, the host 105 can enumerate all the ROC devices 125 and IOC devices 130 in the cluster and set up the BAR addresses. The ROC devices 125 will advertise bus master capability and one of those will be set up as the primary ROC device 125a by the host 105. The host 105 will configure the destination addresses for all the units for the bus master transfers and share the information with the primary ROC device 125a. The primary ROC device 125a will store this information in an internal table and share the IOC device 130 details with secondary ROC device 125 when an VD 115 is configured to be managed by the secondary ROC device 125. In some cases, some or all of the ROC devices 125 and RAID controllers 135 might also have bus master capability enabled (by the host 105) to transfer data to the IOC devices 130. Nonetheless, the term "primary ROC device" is used herein to specify the ROC device 125 that manages the other ROC devices 125 and receives the commands from the host application 110.

On a new device discovery at runtime, the new ROC device125 shares the new device configuration information (which can include characteristic information, as described below) with the primary ROC device 125a. In some embodiments, each ROC device 125, RAID controller 135, and/or IOC device 130 is assigned a unique identifier by the primary ROC device 125a on discovery, and, in some embodiments, the host application 110 can issue commands and configure the specific device using the unique identifier. In some embodiments, only the primary ROC device 125a communicates with the host 105 to receive host IO commands and transmit corresponding host IO completion messages. In some embodiments, however, all the ROC devices 125 have access to the host 105 memory address space so all of them can execute DMA operations to and from the host memory

In some embodiments, the primary ROC device 125a can maintain a configuration table with configuration information (which can include characteristic information) for all the other ROC devices 125 in the ROC cluster 100 and the tasks and/or VDs 115 that they manage or for which they are responsible. The primary ROC device 125a might store such configuration information about the rest of the ROC devices 125, RAID controllers 135, and/or IOC devices 130 in the ROC cluster 100, *e.g.,* in an internal table. In such embodiments, when the host application 110 queries, the primary ROC device 125a can provide a unified list all the ROC devices 125 and IOC devices 130 in the cluster.

In an aspect of some embodiments, the queue depth exposed by the primary ROC device 125a to the host 105 is the total queue depth supported by all the ROC devices 125 in the ROC cluster 100. When a host IO with a unique identifier is received, *e*.*g*., as an MPI from the host application 110, the primary ROC device 125a checks the MPI header to identify the VD 115 to which the host IO is directed and looks up the configuration table to identify the ROC device 125 that manages the VD 115. The primary ROC device 125a then forwards (transmits) the MPI frame to the identified ROC device 125. The receiving ROC device 125 opens the host IO, does any DMA it requires to transfer data from the host 105 memory, computes parity if required, and transmits commands (*e*.*g*., as backend IOs) to the PDs 140 through the IOC device(s) 130 that manage those PDs 140. Once the drive IOs have been performed by the IOC device(s) 130, they will send backend completion messages to the ROC device 125, which then sends a host IO completion message to the host 105 through the primary ROC device 125a using the unique identifier of the IO.

In some embodiments, some or all of the ROC devices 125, RAID controllers 135, and/or IOC devices 130 are PCIe devices. PCle communication involves the transmission and reception of packets called Transaction Layer Packets (TLPs). PCle technology supports peer-to-peer (P2P) communication where one endpoint device can directly communicate with another endpoint device. One PCle device capable of acting as the bus master can initiate a transfer to another PCle device, with the result that the entire transaction remains local to the PCI bus and doesn't involve any other system resources and in particular need not involve the host 105 or the host application 110. Since this transaction takes place between devices that are considered peers in the system, it's referred to as a P2P transaction. This can create efficiencies, at least because the rest of the system remains free to do other work.

In some embodiments, each of the IOC devices 130 generates broadcast messages whenever there is a change of state of any of the PDs 140 (*e.g.,* on discovery, removal, failure etc.) managed by that IOC device 130. In an aspect, each PD 140 can be uniquely identified by the combination of the IOC device PCI Identifier and the PD identifier. In some embodiments, ROC devices 125 that are managing VDs 115 that have arms corresponding with PDs 140 attached to the IOC device 130 will handle any events experienced by that IOC device 130 or its PDs 140 and take necessary action (*e*.*g*., update internal VD 115 configuration table, handle task management etc.) as a part of managing that VD 115.

As noted above, some embodiments allow adding heterogeneous ROC devices 125 to the ROC cluster 100. So RAID controllers 135 (having, as noted ROC+IOC capabilities) with PDs 140 directly connected to them can also participate in the cluster. In some embodiments, such PDs 140 are by the same RAID controller 135 to which they are connected.

The messages transferred between ROC devices 125, RAID controllers 135, and/or IOC devices 130 can be, as described herein, be VDMs, which are supported, *e*.*g*., by PCle standard devices. Depending on the embodiment and particular circumstances of the communication, these VDMs can be unicast, multicast, or broadcast messages. To support the unicast messages, ROC device 125, RAID controller 135, and/or IOC device 130 might store a local table configured with the information (*e*.*g*., broadcast by the primary ROC device 125a) of all the other ROC devices 125 and IOC devices 130 in the ROC cluster 100, such tables could include fields marking all devices in the ROC cluster 100 with which that device directly communicates.

In some embodiments, particular RAID devices can be assigned particular tasks or workloads. For example, a particular ROC device 125 might be configured to manage NVMe specific workloads. When a new VD 115 creation command is issued, the primary ROC device 125a will create the VD 115, update the VD 115 configuration details in its internal VD 115 configuration table and then send a message to the designated ROC device 125 with the VD 115 configuration details. In such a case, the target ROC device 125 for NVMe workloads adds the VD 115 to its internal VD 115 configuration table, and that ROC device 125 acts as the manager for the new VD 115. In some cases, the primary ROC device 125a will have the information of all the VDs 115. In another example, the application can issue a command targeted to a specific ROC device 125 in the ROC cluster 100 (*e.g.,* to fetch the configuration details of that ROC device 125) and the primary ROC device 125a might send a P2P message to the specific ROC forwarding the request.

Various embodiments can handle different caching scenarios. Merely by way of example, In the case of write IOs to RAID-0 and RAID-1 write-through VDs 115 and cache misses for read IOs to write-back VD 115s, some embodiments do not require data to be cached in the ROC device 125. In such embodiments the ROC device 125 instead can send backend IOs to the appropriate IOC device 130, which can initiate the DMA directly between itself and the host 105. As described further herein, in case of Read IOs with cache hit for write-back VDs 115, the ROC device 125 might transfer data from its own cache to the host memory, *e*.*g*., via DMA. In some embodiments, in the case of write IOs to WB VDs 115 and write-through parity VDs, data might need to be cached in the ROC device 125. When the ROC device 125 flushes the data (along with the parity data for parity VDs 115), the target IOC device 130 might transfer the data from the cache of the ROC device 125 to the PDs 140. For regenerative reads and read peers or read-modify-write parity generation, data and parity might be transferred via DMA form the PD 140 to the memory of the ROC device 125.

In some embodiments, for cases in which DMA is used to transfer data between a ROC device 125 and an RAID controller 135, P2P DMA can be used, *e*.*g*., over the PCIe link. Since the chassis backplane switches provide direct links to the slots occupied by the ROC devices 125 and IOC devices 130, P2P DMA is possible without involvement of the host 105. In some embodiments, the source and destination ROC/IOC device identifiers, address space information and/or the scatter-gather lists with the data buffer addresses can be sufficient to uniquely identify the buffers on a specific ROC device 125 and complete the data transfer.

In some embodiments, a host application 110 can configure which ROC device 125 will manage a VD 115 during the creation of that VD 115. When an VD 115 is configured to be managed by a ROC device 125 and to have arms corresponding to PDs 140 from one or more IOC device 130 devices 130, any necessary information (*e*.*g*. IOC device details, list of PDs, VD configuration etc.) can be communicated to the target ROC device 125 (that is, the ROC device 125 selected to manage that VD 115) by the primary ROC device 125a; in an aspect, this can enable the selected ROC device 125to add the VD 115 configuration in its internal VD configuration table and communicate with the IOC device 130 to manage the VD 115.

In some embodiments, when a non-IO device failure occurs, *e*.*g*., a drive or enclosure removal) an IOC device 130 can report the failures along with the relevant data (*e*.*g*., PD identifier, IOC identifier, type of failure etc.) by broadcasting VDMs. All the ROC devices 125 then can identify the relevant devices, *e*.*g*., from their internal VD configuration tables, and/or if necessary, update the tables to account for the failure. The ROC devices 125 managing the VDs 115 linked to the failed devices might perform additional operations like task management, failed IO retry etc. In some embodiments, failure reports/events can be communicated to the host by the primary ROC device 125a.

### Exemplary Capability Negotiation and Workload Management

As noted above, in some embodiments, the host 105 or host application 110 (often with input from the user) might statically assign the task of management of an LD to a specific ROC. In such embodiments, it might be the case that such assignments are only modified if the host application 105 (*e*.*g*., with user input) explicitly modifies the assignments.

In many implementations, the number and/or type of ROC devices 125 chosen by a customer for a ROC cluster 100 might be based on the user's requirements. Merely by way of example, a customer might desire a cluster with at least some heterogeneous ROC devices 125, *e.g.,* a mix of caching ROC devices 125 (*e*.*g*., with amounts of cache memory) and non-caching ROC devices 125 (*e*.*g*., enterprise volume protection boards), perhaps with some RAID controllers 135 included. A customer might wish, for example, to minimize equipment cost while still maintaining required features by employing some caching ROC devices to support write-back or parity VDs 115 for some applications while using non-parity write-through VDs for other applications and/or employing RAID controllers 135 in the customer's existing inventory (assuming such RAID controllers 135 are cable of operating, or can be upgraded or modified to be capable of operating, as members of a cluster 100). It can be cumbersome to manually track, calculate resources requirements (some of which might be internal to the ROC device and difficult for a customer to ascertain) and assign VDs on such heterogeneous environments. For these and other reasons, some embodiments can provide enhanced management capabilities for a ROC cluster 100 and the VDs 115 within that cluster. For example, some such embodiments can provide capability negotiation among RAID devices (*e*.*g*., ROC devices 125 and/or RAID controllers 135) within the ROC cluster 100.

In accordance with some embodiments, RAID devices can exchange capability details using VDMs. In some embodiments, each such VDM might include and/or be assigned a unique identifier to indicate that it is a capability negotiation message. The capability of a RAID device might be defined by parameters like board type, IO queue depth, cache size, max IO frames, supported device types, supported RAID levels, and/or the like. Each capability might be identified by a unique identifier for which each RAID device in the ROC cluster 100 might have an individual value. The following table provides, merely for illustrative purpose, a non-limiting example of such identifiers and values:

**Table 1**

| **Capability ID** | **Description** | **Value** |
|---|---|---|
| 1 | Board Type (*e.g.* RAID, EVP) | 0 - RAID |
| | | 1 - EVP |
| 2 | IO Queue Depth | N |
| 3 | Cache Size in GiB | N |
| 4 | Max IO Frames | N |
| 5 | Bitmap of Supported PD Types | Bit 0 - SAS/SATA |
| | | Bit 1 - NVMe ... |
| 6 | Bitmap of Supported RAID Levels | Bit 0 - R0 |
| | | Bit 1 - R1 |
| | | Bit 2 - R5 |
| | | Bit 3 - R6 |
| | | ... |
| 7 | ... | ... |

In some embodiments a single RAID device might transmit multiple capability negotiation VDMs to advertise different mixes of capabilities. In some embodiments, the primary ROC device 125a, upon receiving the capability negotiation VDMs, might populate an internal table with the capability details (which are referred to herein as "characteristic information" and can be considered a part of the configuration information discussed elsewhere herein) of each RAID device and use that information for assignment/reassignment of VDs 115 to RAID devices, *e*.*g*., whenever there is a change in LD configuration in the cluster. In some embodiments, because the primary ROC device 125a stores the information of the capabilities of all the RAID devices in the cluster in an internal table, when host 105 requests creation of a VD 115, the primary ROC device 125a (or a component thereof, such as the firmware 555 illustrated by Fig. 5) can identify, based on this characteristic information stored in the table, which RAID device is an appropriate candidate to manage the VD. As discussed further herein, the workload of each RAID device can be considered a part of such characteristic information, such that the primary ROC device 125a, in some embodiments, can perform load balancing operations when creating or reassigning VDs VD 115 to RAID devices.

For example, if the host 105 requests creation of a RAID-1 write-though VD 115, the primary ROC device 125 can determine that, since the VD 115 is uses write-through mode and does not require parity, a RAID device in EVP mode can be assigned to manage the VD 115. If there are multiple EVP-mode RAID devices, the primary ROC device 125a might identify the RAID device with that capability that currently manages the fewest number of VDs in the cluster as the appropriate RAID device to manage the new VD 115. In contrast, if the host 105 requests creation of a new RAID-5 VD, an EVP-mode RAID device (which lacks cache memory) would not be appropriate, so the primary ROC device 125a might select the caching RAID device that currently manages the fewest number of VDs in the cluster as the appropriate RAID device to manage the new VD. Similarly the primary ROC device 125a might allow a RAID device with a smaller cache size to manage fewer VDs than a RAID device with a larger cache size when deciding an appropriate RAID device to manage a new (or reassigned) VD. As a further example, if the host 105 requests a new VD using NVMe drives and a desired RAID-level configuration, the primary ROC device 125a might assign the lightest-loaded NVMe-capable RAID device that can support the desired RAID-level configuration to manage the new VD 115.

In some embodiments, a primary ROC device 125a can also perform load-balancing when a VD 115 is deleted. For example, the primary ROC device 125a (or a component thereof, such as the firmware) might determine, based on the configuration information (which can include characteristic information and/or VD assignments, as noted herein) stored internally (*e.g.,* in one or more tables, such as a table comprising characteristic information for each RAID device in the ROC cluster 100 and a table comprising workloads, *e*.*g*., LD assignments of each RAID device in the ROC cluster 100, or, alternatively, a single table storing all such configuration information) to determine whether the RAID device from which the VD has been deleted (or is to be deleted) would be an appropriate RAID device to manage any other VD currently assigned to a different RAID device that is heavily loaded.

More generally, as described further below, in some embodiments, a primary ROC device 125a can shift workloads (*e*.*g*., VDs managed) among different RAID devices in a group to establish a workload equilibrium, .*e*.*g*., an equilibrium in which the workload is balanced to within a specified tolerance, among the RAID devices; and equilibrium in which no RAID device has a workload that negatively impacts the performance of the VD(s) managed by that RAID device or impairs that RAID device; an equilibrium in which a workload of all of the devices imposes roughly the same performance impact on all of the VD(s) in the cluster ROC cluster 100; an equilibrium in which all VD(s) have an acceptable performance level; and/or the like.

In some embodiments, when an event disrupts this workload equilibrium, the primary ROC device 125a can identify such an event (*e*.*g*., based on notice from a RAID device or an IOC device 130, based on notice from the host 105, based on a response-or non-response-from a particular RAID device to a poll message, etc.). Such events can include, without limitation, the addition of a new VD 115 to the ROC cluster 100, the deletion of a VD 115 from the cluster, a failure of a PD 140, IOC device 130, or RAID device (*e*.*g*., a ROC device 125 or a RAID controller 135), a reassignment of a VD 115 from one RAID device to another, a reconfiguration of a RAID level of a VD 115, an increase or decrease of the capacity of a particular VD 115, utilization ratio of the capacity of a particular VD 115, average rate of IOs performed on a particular VD 115, and/or the like. Merely by way of example, to detect failures of RAID devices in the ROC cluster 100, the primary ROC device 125a might broadcast polling VDMs in regular intervals (like heartbeats) with unique timestamps with every secondary RAID device configured to respond each to polling VDM with the same timestamp to confirm that it is live. The primary ROC device 125a might implement a policy that, if a RAID device fails to respond to, *e.g.,* 3 consecutive polling messages, the primary ROC device 125a considers that RAID device to have suffered a failure and will rebalance that RAID device's workload of VDs among other RAID devices..

In any case where the primary ROC device 125a identifies an event that disturbs the workload equilibrium in the cluster (including without limitation the examples above), the primary ROC device 125a might determine a prospective change to the workload distribution among the RAID devices to restore the workload equilibrium in the ROC cluster 100. Such changes could include moving (re-assigning) one or more VDs 115 from one RAID device to another. For example, in the case of a failed RAID device, since the primary ROC device 125a has the information of all the VDs 115 being managed by the failed RAID device, the primary ROC device 125 might re-assign each of those VDs 115 to one or more RAID devices determined to be appropriate for such re-assignment, *e*.*g*., one or more RAID devices with characteristic information indicating capability to manage the type of VD 115 being reassigned and with the lowest workload among such RAID devices.

As another example, an event disturbing a workload equilibrium might be a command, *e*.*g*., from the host application 105, to convert a VD from a write-through mode to a write-back mode. The primary ROC device 125a might determine , for example, based at least in part on the configuration information stored by the primary ROC device 125a, that that the RAID device managing the VD is not capable of managing the VD in write-back mode. In that case, the VD will need to be reassigned to a different RAID device to manage. The primary ROC device 125a might identify a second RAID device that is capable of managing the converted VD and therefore move the VD to that RAID device, *i*.*e*., re-assign management of that VD to the chosen RAID device.

It might be the case, however, that the primary ROC 125a determines that moving the converted VD to the chosen RAID device will result in a workload imbalance between the first RAID device that originally was assigned to manage the VD and the second RAID device to which the converted VD will be re-assigned. In that case, the identify a second VD managed by the second RAID device that can be moved to the first RAID device to restore the equilibrium. If the primary RAID device 125a determines that the second RAID device is capable of managing the second VD (*e*.*g*., based on the configuration information for the second RAID device), the primary ROC device 125a might move the first VD to the second RAID device and the second VD to the first RAID device.

### Exemplary Operations

Figs. 8-15 illustrate methods and operations that can be performed by a ROC cluster, a ROC device, a RAID controller, and/or an IOC device, examples of which are described above. Each of the methods illustrated by Figs. 8-15 should be considered a series of operations, each of which can stand alone in some embodiments. Thus, none of the operations described in the context of the methods of Figs. 8-15 should be considered required unless the context clearly dictates otherwise. Likewise, while these operations are described in a particular order for ease of explanation, no ordering of the operations should be inferred, either in the description below or in the accompanying claims, unless the context clearly dictates otherwise. Each operation of each method can be combined with any operations of any other method within the scope of various embodiments, and the organization of operations described below is provided merely for explanatory purposes. Some of the operations relate to features described elsewhere herein, but any inconsistency or omission in the description of various operations and features may be the product of different embodiments. Certain operations are described below, for illustrative purposes, as being performed by various devices and entities described above (and elsewhere herein), but the methods provided by various embodiments are not limited to performance by any particular entity or device, nor do such operations require any particular functionality other than as expressly described.

Fig. 8, for example, illustrates a method that can be performed by a RAID device (*e*.*g*., a ROC device or a RAID controller) and/oror the like. In accordance with some embodiments, method 800 can be used to perform IOs on a VD, e.g., to write data to a VD, to read data from a VD, and/or the like.

At block 805, the method 800 comprises managing a VD. In some embodiments, the VD comprises one or more spans. Each span might comprise one or more arms, and each arm might correspond to a different PD. For example, a first span might comprise a first arm that uses storage from a first PD and a second arm that uses storage from a second PD. As noted above, a VD can comprise one or more spans, each of which can comprise one or more arms; each arm might correspond to (*e*.*g*., comprise storage from) a different physical disk. Also as noted above, the VD can comprise a plurality of stripes, each of which can comprise a row from each of the one or more spans; each row of a span can comprise a strip from each of the arms in the span, each of the strips can comprise one or more LBAs. As discussed, for example, in the context of Fig. 1A, a single RAID device can manage a plurality of VDs in some embodiments, but this is not required.

Managing a VD can comprise many different operations, including without limitation, reading and/or writing data to the physical disks that serve as arms for the VD, instructing another device to read and/or write such data, calculating and/or storing parity information, controlling caching policies, organizing the physical disks into arms, arms into one or more spans, and/or spans into one or more VDs, maintaining and/or updating such organization (*e*.*g*., online capacity expansion operations or RAID-level migration operations), performing maintenance operations (or portions thereof) on a VD, and/or the like. In some cases, managing a VD might comprise providing instructions to another device (*e*.*g*., an IOC device that manages the physical disks comprising storage for the arms of the VD) to do any of these things, including without limitation instructions on how to configure the VD and/or the PDs. In some respects, these different operations might be divided among various components of a device, such as the hardware and/or firmware components of ROC device 125, *e*.*g*., as discussed above, a RAID controller 135 *e*.*g*., as discussed above, and/or the like. As used herein, "managing" a VD means performing some, all, or part of any such operations, and/or the instruction of another component or device to do so. As such, different components of a RAID device can be considered to be managing a VD, and the RAID device itself can be considered to be managing a VD.

At block 810, the method 800 comprises receiving a first host IO. Generally, a host IO will be generated by a host (*e*.*g*., by a host application), as explained above, and therefore might be considered to be received from the host. A skilled artisan will appreciate, however, that in accordance with various embodiments, the host might send the host IO to a primary ROC device (or RAID controller), which then can identify the secondary RAID device responsible for managing the VD to which the host IO is directed, as mentioned above and discussed in detail further below. Thus, as used herein, the term "receiving a host IO" can include without limitation receiving the host IO directly from the host (*e*.*g*., as an MPI message, as discussed above) and/or receiving the host IO from another device, such as a primary ROC device (*e*.*g*., as an MPI message, encapsulated in a PCIe VDM, packetized, etc.). If the host IO is packaged in some way when it is received, receiving the host IO can comprise decapsulating, depacketizing, or otherwise processing received information to extract or derive the host IO (*e.g.,* as an MPI message) from the packaging. Other than that operation, the operations of the method 800 can be the same or similar whether the host IO is received directly from the host or from a primary ROC device.

At block 820, the method 800 comprises generating one or more ACIOs from the host IO, for example, as described above. At block 820, the method 800 comprises identifying one or more IOCs to which the host IO is directed. As used herein, the term "directed" when referring to a host IO means the VD with which the data requested by the IO is to be exchanged (e.g., read or written), to the PDs that comprise the storage for the arms of the VD, and/or to the IOC(s) that manage those PDs. If the RAID device performing the method 800 is a RAID controller, and the PDs serving as arms for the VD to which the host IO is directed, the RAID controller might identify itself as the IOC device (or one of the IOC devices) to which the host IO is directed. A number of techniques can be used to identify the VD to which the host IO is directed. Merely by way of example, the host IO itself might include an identifier of the VD, which can be used by the device receiving the host IO to identify the VD.

At block 825, the method comprises generating one or more backend IOs from one or more of the ACIOs (and, ultimately, from the host IO). For example, in some embodiments, the host IO might be directed to two different arms of the VD, each managed by a different IOC; in such a case, and the method 800 might comprise generating a first backend IO directed to the first arm; and a second backend IO directed to the second arm. In some cases, the operation of generating a backend IO might be similar to generating a drive IO to be executed locally by the ROC device, except that the ROC device does not execute drive IOs because it has no direct physical connection or communication with the PDs themselves. In some embodiments, one or more drive IOs might be encapsulated, packaged, or otherwise incorporated into a backend IO. In other cases, the backend IO might include information from which the appropriate IOC can derive the necessary drive IO(s) from the backend IO. As discussed below, various embodiments can feature different types of backend IOs, depending on the relative functionality of the ROC devices and IOC devices in the cluster.

At block 825, the method 800 comprises transmitting the generated backend IO(s) to the appropriate IOC device(s). In some cases, the backend IO(s) are prepared for transmission, *e.g.,* by encapsulating the backend IO(s) into a particular transport format, such as a PCle VDM, by packetizing the backend IO(s), and/or the like. In some cases, as noted above, the ROC device might transmit backend IOs to multiple IOCs to perform a single host IO. Thus the method 800 might comprise transmitting a first backend IO for reception by a first IOC and transmitting a second backend IO for reception by a second IOC. In other embodiments, a VD might comprise many arms (in some cases, as many as the hardware of a ROC device will support, which might be several hundred), and the method 800 might comprise generating any number of backend IOs directed to any number of IOC devices managing the PDs that correspond to the arms to which the host ID is directed. Similarly, as noted above, a single IOC device might manage PDs that correspond to arms for multiple VDs, which might be managed by multiple ROC devices. For instance, continuing the example above, a second ROC device manage a second VD having arms on a third PD managed by the first IOC device and a fourth PD managed by the second IOC device; in this case, the second ROC might send a third backend IO to the first IOC device and a fourth backend IO to the second IOC device.

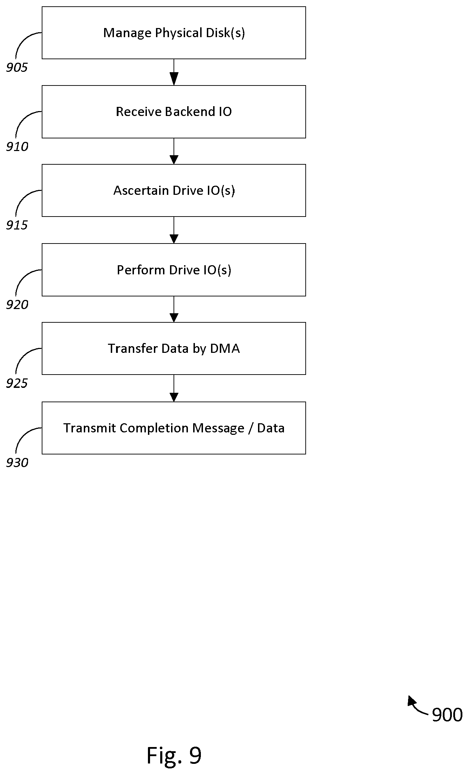

Turning briefly to Fig. 9, a method 900 might be performed by an IOC device or other appropriate device. As noted above, a single ROC device might transmit backend IOs to multiple IOC devices while performing one host IO. As such, the method 900 might be performed multiple times by one or more IOC devices when performing a single host IO.

At block 905, the method 900 comprises managing one or more PDs. Like the management of a VD, the management of a PD can include one or more of many different operations (although those operations might be different than the operations of managing a VD). For example, managing a PD might comprise identifying the PD using any appropriate technique, e.g., by port number, drive identifier, and/or the like. In some embodiments, managing a PD might comprise tracking the VD(s) that have arms corresponding to the PD; *i.e.,* VD(s) that use storage of a PD for arms. In some embodiments, managing a PD might comprise storing a record of LBAs that are stored on the PD. In various embodiments, any other operations that are appropriate for maintaining the PD as part of a VD and/or for maintaining the capability of performing IOs on the PD can be considered part of managing a PD. As illustrated by Fig. 1A, a single IOC device can manage one or more PDs. In some cases, the method 800 might comprise transmitting a plurality of backend IOs to one or more IOCs (*i.e.,* the IOC(s) that manage the PDs to which the host IO is directed).

At block 910, the method 900 comprises receiving a backend IO, and at block 915, the method 900 comprises ascertaining one or more drive IOs to complete the backend IO. As noted above, different embodiments might include different types of data in the backend IO. In general, a backend IO might include sufficient information to allow an IOC or other device to identify, from the backend IO, which drive IOs need to be performed on which PDs to perform the backend IO on the VD to which the host IO was directed. For example, the backend IO might specify an operation (e.g., read or write), a number of LBAs on which to perform the operation, and/or a header LBA that begins the chain of LBAs on which the operation is to be performed.

Different embodiments might provide for different levels of processing and/or functionality of the IOC device; for instance, the IOC device might include a mapping of a higher-level structure to LBAs, in which case the backend IO might include information about that higher-level structure to allow the IOC device to determine the LBAs affected by the operation. In other embodiments, as noted above, the backend IO might specify the LBAs affected in specific drive IOs encapsulated by the backend IO, and the only functionality required of the IOC might be to extract those drive IOs and execute the drive IOs on the appropriate PD(s). (In some cases, the backend IO might specify the PD(s), while in other cases, the IOC device might have functionality to identify the correct PDs from higher-level information and/or from the LBAs themselves.

At block 920, then, the method 900 comprises performing one or more drive IOs on one or more PDs in response to receiving the backend IO. In some embodiments, as noted above, an IOC device (or other device) might have the capability of performing DMA data transfers with the host (e.g., using direct communication with the host's memory). Thus, at block 925, the method 900 might comprise transferring data involved in the disk IO directly with the host and/or the cache memory of the ROC device managing the VD (e.g., via DMA). This procedure can be used to obtain data from the host memory (e.g., for a write IO) or the cache memory of the ROC device (e.g., for a cache flush operation) or to provide data to the host memory (e.g., for a read IO) or the memory of the ROC device (e.g., for read-modify-write parity generation, regenerative read, etc.), as discussed above.

At block 930, the method 900 comprises transmitting a backend IO completion message. In a general sense, the backend IO completion message can comprise information sufficient to inform the device that sent the backend IO (*e.g.,* a ROC device) that the drive IOs necessary to complete the backend IO have been performed, or, alternatively, that those drive IOs could not be performed, if that is the case. In some cases, *e.g.,* when the backend IO is a read IO and the device (*e.g.,* an IOC device) receiving the backend IO did not transfer the data read by the drive IO(s) by DMA, the backend IO completion message can include that data and/or otherwise reference the data read by the drive IOs (*e.g.,* by referring to one or more separate messages, etc.).

Returning to Fig. 8, at block 830, the method 800 comprises receiving one or more backend IO completion messages and/or data (*e.g.,* from the IOC device(s) to which the backend IOs were transmitted). As noted above, each IO might have a unique identifier, which can be used to correlate the completion message to the original IO. At block 835, the method 800 comprises transmitting a host IO completion message and/or accompanying data corresponding to each host IO received, *e.g.,* for reception by the entity from which the host IO was received (*e.g.,* , might be a primary ROC device, the host itself, etc.). In some embodiments, the method 800 might include tracking each backend IO transmitted and a corresponding completion message/data corresponding to each backend IO. In such cases, sending the completion message might be performed after all backend IO completion messages have been received, and the host IO completion message might account for each of the backend IO completion messages. For instance, if one or more backend IO completion messages indicated that the corresponding backend IOs failed, the host completion message might indicate that the host IO failed.

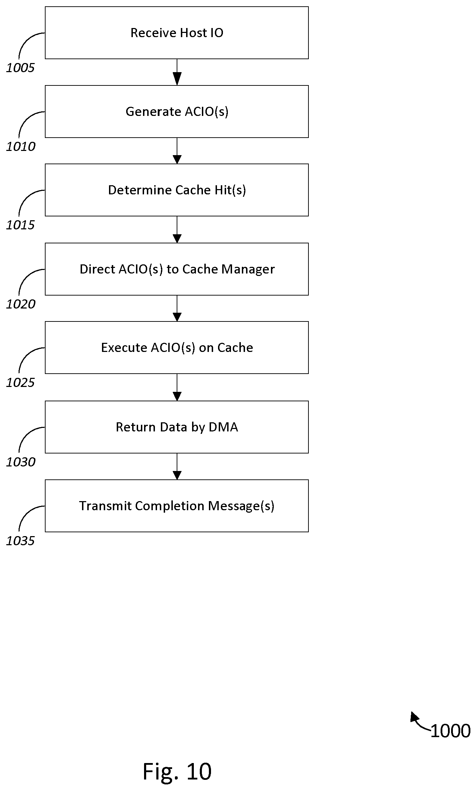

Fig. 10 illustrates a method that can be performed, *e.g.,* by a ROC device or a RAID controller, when a host IO requests data that might have been cached by the device receiving the host IO, *e.g.,* a host read IO. At block 1005, the method 1000 comprises receiving the host IO, which as noted, might comprise a read operation. At block 1010, the method 1000 comprises generating one or more ACIOs. At block 1015, the method 1000 comprises determining that at least one of the ACIOs is a cache hit. Merely by way of example, the device receiving the host IO might maintain a hash table identifying LBAs that have been read from a VD, and for each ACIO generated, the device might check the hash table to determine whether that ACIO requests data that has been cached. If so, the method 1000 might comprise directing the ACIO to a cache manager (*e.g.,* as described above in the context of Fig. 5). At block 1025, the method 1000 comprises executing the ACIO that is a cache hit on the cache to read data requested by the host IO. A skilled artisan will appreciate that data often can be read from a cache much more quickly than it can be read from disk, so executing the ACIO on the cache can provide a result more quickly, and it also can reduce traffic on the network/bus of the ROC cluster.

As noted above, in some embodiments, various devices (*e.g.,* RAID controllers, ROC devices, IOC devices, etc.) might include a DMA interface to exchange data directly with the host. In such embodiments, the method 1000 can comprise returning the data read from the cache to the host by DMA (block 1030). For ACIOs that are not cache hits, the device can follow a procedure similar to that described with respect to Fig. 8 to instruct another device to read the data from disk, or, in the case of a RAID controller that manages the PD to which the ACIO is directed, can generate drive IO(s) (*e.g.,* as described above) and perform those drive IO(s) directly on the attached PD. At block 1035, the method 1000 can comprise transmitting one or more host completion messages. This operation can be similar, in some embodiments, to the process described above with regard to block 835.

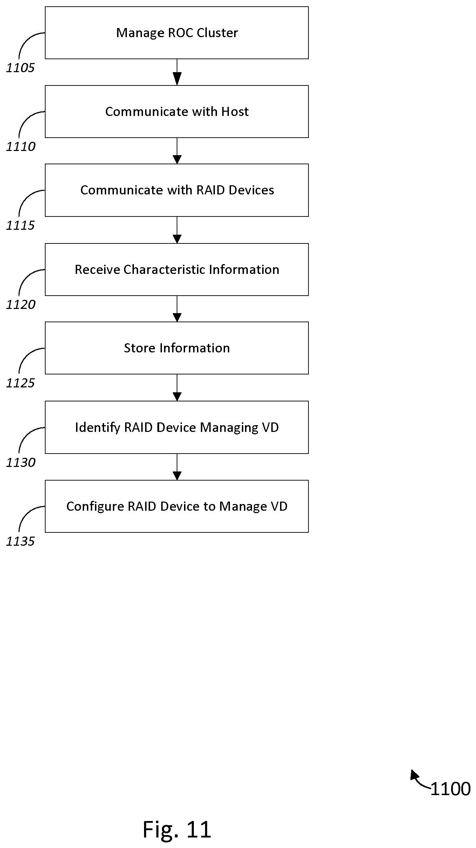

Fig. 11 illustrates a method 1100 that might be performed by the manager of a ROC cluster and/or a primary RAID device, such as a primary ROC device, primary RAID controller, and/or the like.

At block 1105, the method 1100 comprises managing a ROC cluster. As discussed above, a ROC cluster, *e.g.,* the ROC cluster 100 of Fig. 1A, might comprise a plurality of RAID devices. In some embodiments, the ROC cluster might comprise a plurality of IOC devices, although, in other embodiments, as noted above, any attached IOC devices might not be considered part of the ROC cluster. Managing a ROC cluster can comprise a variety of operations, including operations described elsewhere herein, including without limitation operations described above and/or in the context of this Fig. 11 and Figs. 12-15. In a general sense, managing a ROC cluster can comprise any operation that can configure, enable, instruct, and/or otherwise cause one or more secondary RAID devices (which can be any RAID devices in the cluster other than the primary RAID device) to manage one or more VDs for a host and/or a host application, to perform host IOs on VDs in the cluster (and/or cause other devices, such as IOC devices, to perform drive IOs host IOs on PDs that correspond to arms of VDs in the cluster, to perform the host IO).

In some embodiments, as noted above, a ROC cluster might have two or more primary RAID devices, which can share the duties of managing the ROC cluster and/or performing various operations described with respect to Figs. 11-15. In some embodiments, a primary ROC can also function as a secondary ROC to manage one or more VDs in addition to managing the ROC cluster.

At block 1110, the method 1100 comprises communicating with a host. As noted above, in some embodiments, the primary RAID device handles all of the communication between the host and the members of the cluster (other than, in some cases, DMA data exchanges between an IOC device or secondary RAID device, *e.g.,* as described above). In some embodiments, communications between the primary RAID device and the host might comprise MPI messages, PCIe VDMs or other PCI communications, IP communications, and/or the like.

At block 1115, the method 1100 comprises communicating with the plurality of RAID devices in the cluster. Such communications can include, but are not limited to, PCIe VDMs and/or MPI messages (*e.g.,* MPI messages, which might be encapsulated, forwarded to a secondary RAID device). As noted above and described in further detail below, a primary RAID device can communicate with a RAID device to transmit a host IO to be performed by the RAID device.

In some embodiments, however, the communications between a primary RAID device and a secondary RAID device can include additional communications, including without limitation the communications described above. Merely by way of example, the primary RAID device might send polling messages to other RAID devices in the group, periodically and/or based on various events, to determine the status of the RAID devices. Such status information can include, without limitation, whether the RAID device is operational or failed, a current workload of the RAID device (which can include not only the number of VDs managed by the RAID device, of which the primary RAID device might already be aware based on stored configuration information, but also one or more IO rates, etc.), and/or the like. In some embodiments, the primary RAID device might query other RAID devices in the cluster for configuration information about one or more of the RAID devices.

At block 1120, the method 1100 comprises receiving configuration information from some or all of the RAID devices in the cluster. In some cases, the information is sent from the RAID devices in response to an inquiry from the primary RAID device. In other cases, the RAID devices might send the configuration information of their own accord, *e.g.,* at start-of-day, upon entry into the ROC cluster 100, in response to a command from the host application 110, etc. In some cases, as noted above, the configuration information can include characteristic information, non-limiting examples of which are listed in Table 1, above. As noted above, configuration information can include workload information, including identification of the VDs managed by that RAID device and/or identification and/or configuration information of PDs 140 corresponding to arms of such VDs and/or the IOC device(s) 130 managing such VDs. Workload information can also include any appropriate workload statistics, such as IOs per second handled by the RAID device, etc.

At block 1125, the method 1100 comprises storing information about RAID devices and IOC devices. As noted above, a primary RAID controller can store such configuration information about each member of the ROC cluster 100, for example in one or more tables stored internally at the primary RAID device.

At block 1130, the method 1100 comprises identifying each RAID device managing a VD. As noted above, each VD can have a unique identifier, as can each entity in ROC cluster 100 or involved with the ROC cluster 100, such as secondary RAID devices, IOC devices 130, PDs 140, etc. Such identifiers can be considered part of the configuration information and can be stored by the primary RAID device, and such information can be used to identify a RAID device that manages a particular VD, for example to determine, as discussed below, the RAID device to which a particular host IO should be forwarded, based on the VD to which the host IO is directed.

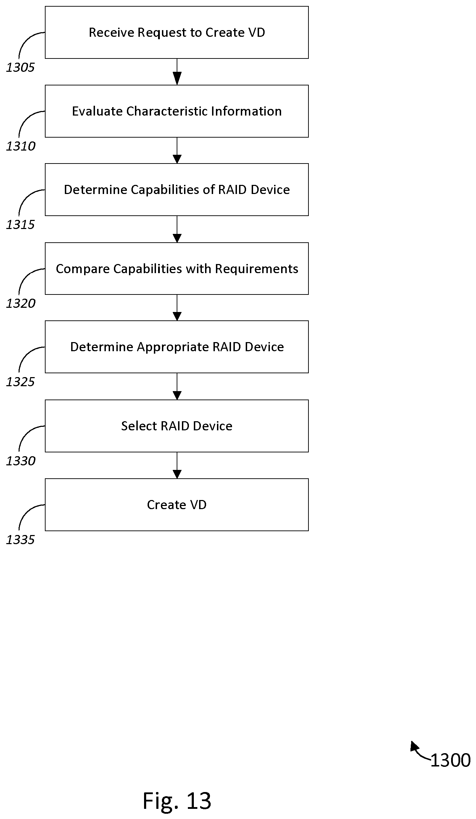

At block 1135, the method 1100 comprises configuring a RAID device to manage a VD, for example using the techniques described above. Fig. 13, described below, illustrates several operations for selecting and configuring a RAID device to manage a VD.

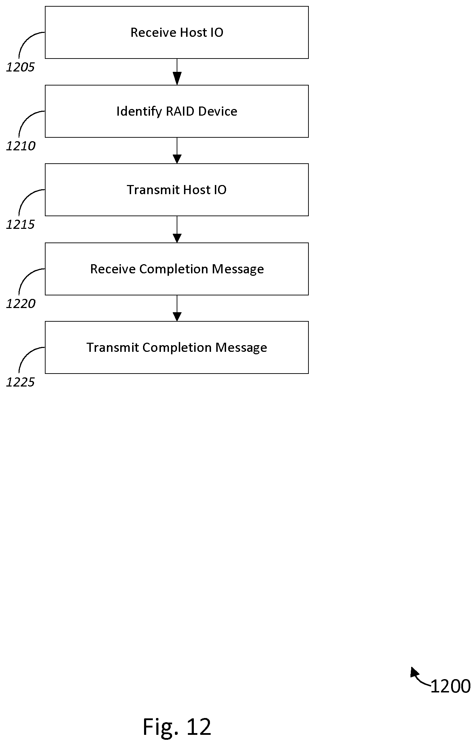

Fig. 12 illustrates a method 1200 of performing a host IO. In some embodiments, the method 1200 might be performed by the manager of a ROC cluster and/or a primary RAID device, such as a primary ROC device, primary RAID controller, and/or the like.

At block 1205, the method 1200 comprises receiving a host IO. In some embodiments the host IO might transmitted by, and/or received from, a host and/or a host application, *e.g.,* as an MPI message as discussed above. At block 1210, the method 1200 comprises identifying the RAID device that manages the VD for the host IO, *e.g.,* as described above. At block 1215, the method 1200 comprises transmitting the host IO for reception by the identified RAID device, including but not limited by using techniques described above for doing so.

At block 1220, the method 1200 comprises receiving a host IO completion message from the identified RAID device. As noted above, the host IO might have a unique identifier, and/or the completion message might include that identifier to correlate the completion message with the original host IO. In some cases, the host IO completion message might be a host IO completion message sent using techniques described above in the context of Fig. 8.

At block 1225, the method 1200 comprises transmitting the host IO completion message for reception by the host. In some cases, the host IO completion message might be transmitted as an MPI message with the completion status. There can also be multiple queues for successful and failed host IO completions. In some embodiments, the host IO completion message informs the host 105 that the entirety of the host IO, including all necessary data exchange with RAID device caches and the host memory (*e.g.,* via DMA) and all drive IOs have been successfully performed. If any such operations failed, the host IO completion message received from the RAID device managing the VD should provide an indication of that failure, and the host IO completion message transmitted to the host 105 (which might simply be the message from the RAID device managing the VD forwarded by the primary RAID device), should indicate a failure of the host IO. In such a case, the host 105 might retry the host IO or take some other action in response to the failure.

Fig. 13 illustrates a method of creating a VD and assigning a RAID device to manage the VD. In some embodiments, the method 1300 might be performed by the manager of a ROC cluster and/or a primary RAID device, such as a primary ROC device, primary RAID controller, and/or the like.

At block 1305, the method 1300 comprises receiving a request from a host to create a VD. In an aspect, the request might specify that the VD must possess a set of desired capabilities. At block 1310, the method 1300 comprises evaluating characteristic information of one or more of the RAID devices in the ROC cluster 100. As noted above, a primary RAID device can obtain and/or store configuration information for members of the cluster, and the method 1300 can include evaluating this information.

Based at least in part on this information, the capabilities of one or more of the RAID devices can be determined, e.g., by performing lookups on tables similar to Table 1, above. At block 1320, then, the method 1300 comprises comparing capabilities of one or more of the RAID devices with the desired capabilities of the VD to be created. At block 1325, the method 1300 might comprises determining that one or more of the RAID devices would be an appropriate RAID device to manage the first VD. As described above, this determination can be made based at least in part, on a match between the desired capabilities of the VD and the characteristic information of one or more of the RAID devices. Additionally or alternatively, as discussed above, a determination whether a RAID devices is appropriate to manage a new (or re-assigned) VD can include considering the relative workloads of the RAID devices with the characteristic information matching the desired capabilities of the VD. For instance, if two RAID devices are capable of managing a VD with the desired capabilities, a primary ROC device 125a might determine that, of the two RAID devices, the one currently managing the fewest VDs is an appropriate RAID device to manage the new VD. Thus, at block 1330, the method 1300 comprises selecting a RAID device. In some cases, the RAID device to is selected based at least in part on the characteristic information of that RAID device and/or the workload of that RAID device relative to workloads of other capable RAID devices. Merely by way of example, as discussed above, a primary ROC device might determine the capabilities of the RAID device based on the characteristic information and then determine, e.g., based on workload information, that the RAID device is the most appropriate device among those with required capabilities to manage the VD.

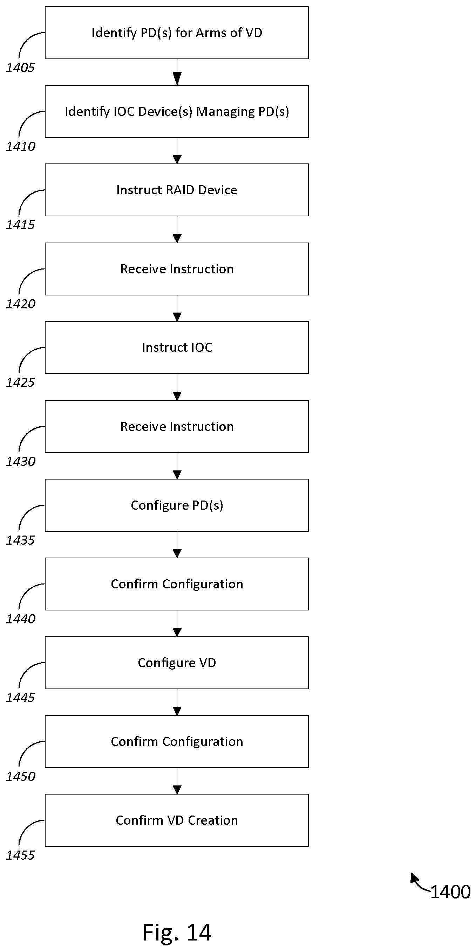

At block 1335, the method 1300 comprises creating the VD. A number of techniques can be used to create a VD. In an aspect, creating a VD can comprise a primary ROC device configuring a selected RAID device to create the VD and/or manage the VD that will be created (or, in some cases, a VD that already had been created and/or is being reassigned, *e.g.,* to balance workloads of RAID devices in the cluster). Merely by way of example, Fig. 14 illustrates a method 1400 of creating a VD in accordance with some embodiments.

At block 1405, the method 1400 comprises identifying one or more PDs that will correspond to the arms of the VD, and at block 1410 the method 1400 comprises identifying the IOC devices 130 that manage those PDs. These operation can be performed in a variety of ways. For example, an identification of these entities might be provided by the host application 110 (and/or a user thereof), identified by the primary ROC device 125a based on current utilization of IOC devices 130s and/or PDs 140, characteristics of the IOC devices 130 and/or PDs 140 (such as capacity, NVMe vs. SATA, etc.), and/or identified using any suitable technique.

At block 1415, the method 1400 comprises Instructing the selected RAID device to create the new VD. Instructing the selected RAID device can comprise sending one or more messages (*e.g.,* VDMs) to the selected RAID device instructing the selected RAID device to use the identified IOC device(s) 130 and/or PDs 140 and specifying the desired characteristics of the VD (e.g., VD capacity, RAID level, write-through vs. write-back, type of PD, etc.). Instructing the selected RAID device can also transmitting configuration information to the selected RAID device about the selected IOC device and/or PDs. Such information can include, without limitation, identification information, capability information, and/or the like. Based on this information, the selected RAID device can create the VD, *e.g.,* using standard techniques. In some embodiments, the message(s) might instruct the selected RAID device to create the VD by communicating with the identified IOC device(s) 130.

At block 1410, the method 1400 comprises receiving, *e.g.,* by the selected RAID device, the instruction to create a VD, and at block 1415, the method 1400 comprises instructing each identified IOC device 130 to configure one or more of the identified PDs 140 to serve as an arm of the VD. At block 1420, the method 1400 comprises receiving, *e.g.,* at the selected IOC device(s) 130 the instruction to configure the PD(s) 140. At block 1425, the method 1400 comprises configuring the PD(s) to serve as an arm of the VD. In some embodiments, the identified IOC device 130 managing that PD can perform this configuration. At block 1430, the method 1400 comprises confirming, *e.g.,* by each of the identified IOC device(s) 130, the configuration of the PD(s), and at block 1435, the method 1400 comprises receiving, *e.g.,* by the selected RAID device, the confirmation of the configuration of the PD(s). At block 1440, the method 1400 comprises configuring the VD. In an aspect, as noted above, the selected RAID device can configure the VD, *e.g.,* using any of a variety of established techniques.

At block 1445, the method 1400 comprises confirming, *e.g.,* by the selected RAID device, the configuration of the VD, and at block 1450, the method 1400 comprises receiving, *e.g.,* by the primary RAID device confirmation of the configuration of the VD. This confirmation might take the form of, *e.g.,* a VDM from the selected RAID device to the primary RAID device. At block 1455, the method 1400 comprises transmitting confirmation of the creation of the VD to the host *e.g.,* based at least in part on receiving the confirmation from the first RAID device. This confirmation can take the form of an MPI message, a VDM, or any other appropriate message.

A skilled artisan will appreciate, based on this disclosure, that operations similar to those described in the context of Figs. 13-14 can be used to re-assign a VD to a different RAID device *(e.g.,* as part of a load balancing procedure) and/or reconfiguring a VD (which might require assigning the VD to a different RAID device based on changing capabilities of the reconfigured VD).

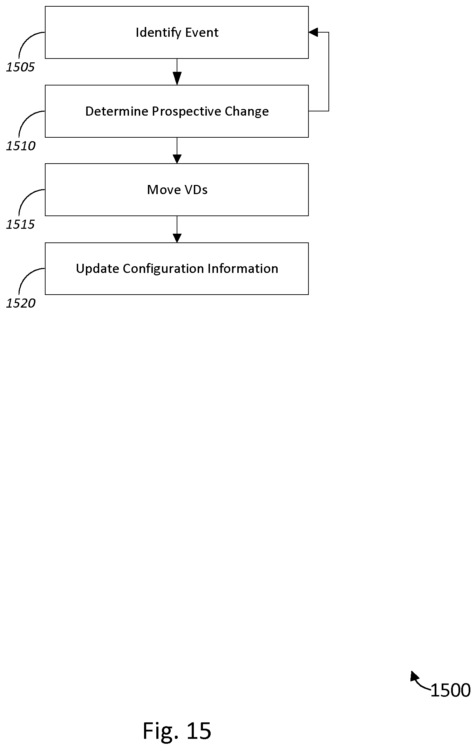

Fig. 15 illustrates a method 1500 of load balancing a ROC cluster. In some embodiments, the method 1200 might be performed by the manager of a ROC cluster and/or a primary RAID device, such as a primary ROC device, primary RAID controller, and/or the like.

At block 1505, the method 1500 comprises identifying an event that disrupts a workload equilibrium among the plurality of RAID devices, for example as described above. At block 1510, the method 1500 comprises determining a prospective change to a workload distribution to restore the workload equilibrium among the plurality RAID devices, *e.g.,* as described above. This prospective change, of course, might further disrupt the workload equilibrium (or disrupt the equilibrium in other ways). As such, the method 1500 might reiterate from block 1505 until a new equilibrium is found. Merely by way of example, in some cases

At block 1515, the method 1500 comprises moving at least one VD among the plurality of additional devices to produce the change to the workload distribution. In some cases, as noted above, techniques similar to those described in the context of Fig. 13 can be used to identify an appropriate RAID device to which to move the VD.

At block 1520, the method 1500 comprises updating configuration information, *e.g.,* configuration information stored at the primary RAID device, to reflect the new configuration of VDs on the cluster.

### Exemplary Computing Environment

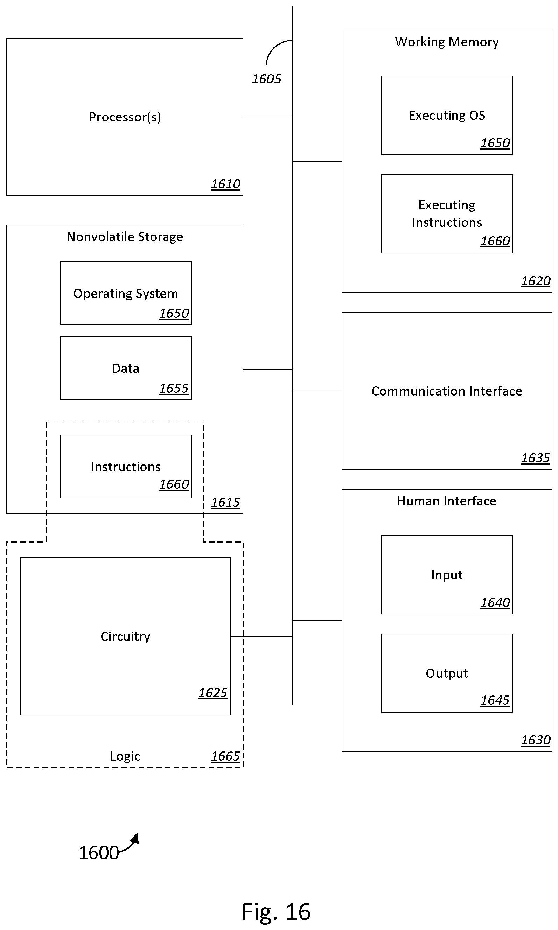

Fig. 16 is a block diagram illustrating an example of a device 1600, which can function as described herein, a host, a computer system, etc. (or a component of any of these) in accordance with various embodiments, and/or performing some or all operations of the methods described herein. No component shown in Fig. 16 should be considered necessary or required by each embodiment. For example, many embodiments may not include a processor and/or might be implemented entirely in hardware or firmware circuitry. Similarly, many embodiments may not include input devices, output devices, or network interfaces.

With that prelude, as shown in Fig. 16, the device 1600 may include a bus 1605. The bus 1605 can include one or more components that enable wired and/or wireless communication among the components of the device 1600. The bus 1605 may couple together two or more components of Fig. 16, 16, 16, 16, such as via operative coupling, communicative coupling, electronic coupling, and/or electric coupling. Such components can include a processor 1610, nonvolatile storage 1615, working memory (*e.g.,* system dynamic random-access memory (DRAM)) 1620, and/or circuitry 1625. In some cases, the system 1600 can include human interface components 1630 and/or a communication interface 1635.

While these components are displayed as integrated within the device 1600, certain components might be located externally from the device 1600. As such, the device 1600 might include, instead of or in addition to the components themselves, facilities for communicating with such external devices, which therefore can be considered part of the device 1600 in some embodiments.

Merely by way of example, the nonvolatile storage 1615 can include a hard disk drive (HDD), a solid-state drive (SSD), and/or any other form of persistent storage (*i.e.,* storage that does not require power to maintain the state of the stored data). While such storage often is incorporated within the device 1600 itself, such storage might be external to the device 1600 and can include external HDD, SSD, flash drives, or the like, as well as networked storage (*e.g.,* shared storage on a file server, etc.), storage on a storage area network (SAN), cloud-based storage, and/or the like. Unless the context dictates otherwise, any such storage can be considered part of the device 1600 in accordance with various embodiments. In an aspect, the storage 1615 can be non-transitory.

Similarly, the human interface 1630 can include input components 1640 and/or output components 1645, which can be disposed within the device 1600, external to the device 1600, and/or combinations thereof. The input components 1640 can enable the device 1600 to receive input, such as user input and/or sensed input. For example, the input components 1640 may include a touch screen, a keyboard, a keypad, a mouse, a button, a microphone, a switch, a sensor, a global positioning system sensor, an accelerometer, a gyroscope, and/or an actuator. In some cases, such components can be external to the device 1600 and/or can communicate with components internal to the device 1600 such as input jacks, USB ports, Bluetooth radios, and/or the like. Similarly, the output component 1645 can enable the device 1600 to provide output, such as via a display, a printer, a speaker, and/or the like, any of which can be internal to the device 1600 and/or external to the device but in communication with internal components, such as a USB port, a Bluetooth radio, a video port, and/or the like. Again, unless the context dictates otherwise, any such components can be considered part of the device 1600 in accordance with various embodiments.

From these examples, it should be appreciated that various embodiments can support a variety of arrangements of external and/or internal components, all of which can be considered part of the device 1600. In certain embodiments, some or all of these components might be virtualized; examples can include virtual machines, containers (such as Docker containers, etc.), cloud computing environments, platform as a service (PaaS) environments, and/or the like.

In an aspect, the nonvolatile storage 1615 can be considered a non-transitory computer readable medium. In some embodiments, the nonvolatile storage 1615 can be used to store software and/or data for use by the device 1600. Such software/data can include an operating system 1650, data 1655, and/or instructions 1660. The operating system can include instructions governing the basic operation of the device 1600 and can include a variety of personal computer or server operating systems, embedded operating systems, and/or the like, depending on the nature of the device 1600. The data 1655 can include any of a variety of data used or produced by the device 1600 (and/or the operation thereof), such as media content, databases, documents, and/or the like. The instructions 1660 can include software code, such as applications, object code, assembly, binary, etc. used to program the processor 1610 to perform operations in accordance with various embodiments. In an aspect, the operating system 1650 can be considered part of the instructions 1660 in some embodiments.

The processor 1610 can include one or more of a central processing unit, a graphics processing unit, a microprocessor, a controller, a microcontroller, a digital signal processor (DSP), programmable logic (such as a field-programmable gate array (FPGA) an erasable programmable logic device (EPLD), or the like), an application-specific integrated circuit (ASIC), a system on a chip (SoC) and/or another type of processing component. The processor 1610 can be implemented in hardware, firmware, or a combination of hardware, firmware and/or software. In some implementations, the processor 1610 includes one or more processors capable of being programmed to perform one or more operations or processes described elsewhere herein.

For example, in some embodiments, the device 1600 can comprise logic 1665. Such logic can be any sort of code, instructions, circuitry, or the like that can cause the device 1600 to operate in accordance with the embodiments herein (*e.g.,* to perform some or all of the processes and/or operations described herein). Merely by way of example, the logic 1665 can include the instructions 1660, which might be stored on the nonvolatile storage 1615 as noted above, loaded into working memory 1620, and/or executed by the processor 1610 to perform operations and methods in accordance with various embodiments. In an aspect, these instructions 1660 can be considered to be programming the processor 1610 to operate according to such embodiments. In the same way, the operating system 1650 (to the extent it is discrete from the instructions 1660) might be stored on the nonvolatile storage 1615, loaded into working memory 1620, and/or executed by a processor 1610.

Alternatively, and/or additionally, logic can include the circuitry 1625 (*e.g.,* hardware or firmware), which can operate independently of, or collaboratively with, any processor 1610 the device 1600 might or might not have. (As noted above, in some cases, the circuitry 1650 itself can be considered a processor 1610.) The circuitry 1625 might be embodied by a chip, SoC, ASIC, programmable logic device (FPGA, EPLD, etc.), and/or the like. Thus, some or all of the logic enabling or causing the performance of some or all of the operations described herein might be encoded in hardware or firmware circuitry (*e.g.,* circuitry 1650) and executed directly by such circuitry, rather than being software instructions 1660 loaded into working memory 1620. (In some cases, this functionality can be embodied by hardware instructions.) Thus, unless the context dictates otherwise, embodiments described herein are not limited to any specific combination of hardware, firmware, and/or software.

The device 1600 can also include a communication interface 1635, which can enable the device 1600 to communicate with other devices via a wired (*e.g.,* electrical and/or optical) connection and/or a wireless (RF) connection. For example, the communication interface 1660 may include one or more RF subsystems (such a Bluetooth subsystem, such as those described above, for example, a Wi-Fi subsystem, a 5G or cellular subsystem, etc.). Additionally or alternatively, some such systems can be implemented in combination, as discrete chips, as SoCs, and/or the like. The communication interface 1635 can further include a modem, a network interface card, and/or an antenna. In some cases, the communication interface 1630 might comprise a plurality of I/O ports, each of which can be any facility that provides communication between the device 1600 and other devices; in particular embodiments, such ports can network ports, such as Ethernet ports, fiber ports, etc. Other embodiments can include different types of I/O ports, such as serial ports, pinouts, and/or the like. Depending on the nature of the device 1600, the communication interface 1635 can include any standard or proprietary components to allow communication as described in accordance with various embodiments.

### Additional Examples

A system in accordance with one set of embodiments comprises a first input-output controller (IOC) device in communication with a first plurality of physical disks. In some embodiments, the first plurality of physical disks comprises a first physical disk. In some embodiments, the system comprises a second IOC in communication with a second plurality of physical disks. In some embodiments, the second plurality of physical disks comprises a second physical disk.

In some embodiments, the system comprises a first redundant array of independent disks (RAID) on chip (ROC) device. In some embodiments, the first ROC device comprises hardware circuitry to manage a first virtual disk. In some embodiments, the first virtual disk comprises one or more spans. In some embodiments, each span comprises one or more arms. In some embodiments, each arm corresponds to a different physical disk. In some embodiments, the one or more spans comprises a first span. In some embodiments, the first span comprises a first arm corresponding to the first physical disk and/or a second arm corresponding to the second physical disk. In some embodiments, the ROC device comprises hardware circuitry to receive a first host IO from a host. In some embodiments, the ROC device comprises hardware circuitry to generate a first plurality of backend IOs from the first host IO. In some embodiments, the plurality of backend IOs comprises a first backend IO directed to the first arm, and/or a second backend IO directed to the second arm. In some embodiments, the ROC device comprises hardware circuitry to transmit the first backend IO for reception by the first IOC device. In some embodiments, the ROC device comprises hardware circuitry to transmit the second backend IO for reception by the second IOC device.

In some embodiments, the first IOC device comprises hardware circuitry to receive the first backend IO. In some embodiments, the first IOC device comprises hardware circuitry to perform a first one or more drive IOs on the first physical disk in response to receiving the first backend IO. In some embodiments, the second IOC device comprises hardware circuitry to receive the second backend IO. In some embodiments, the second IOC device comprises hardware circuitry to perform a second one or more drive IOs on the second physical disk in response receiving to the second backend IO.

In some embodiments, the first plurality of disks comprises a third physical disk. In some embodiments, the second plurality of disks comprises a fourth physical disk. In some embodiments, the system comprises a second ROC device. In some embodiments, the second ROC device comprises hardware circuitry to manage a second virtual disk comprising a second span. In some embodiments, the second span comprises a third arm corresponding to the third physical disk. In some embodiments, the second span comprises a fourth arm corresponding to the fourth physical disk.

In some embodiments, the second ROC device comprises hardware circuitry to receive a second host IO. In some embodiments, the second ROC device comprises hardware circuitry to generate a second plurality of backend IOs from the first host IO. In some embodiments, the plurality of backend IOs comprises a third backend IO directed to the third arm, and/or a fourth backend IO directed to the fourth arm. In some embodiments, the second ROC device comprises hardware circuitry to transmit the third backend IO for reception by the first IOC device. In some embodiments, the second ROC device comprises hardware circuitry to transmit the fourth backend IO for reception by the second IOC device.

In some embodiments, the system comprises a ROC cluster comprising a plurality of RAID devices. In some embodiments, plurality of RAID devices comprises the first ROC device and the second ROC device. In some embodiments, the first ROC device is a primary ROC device. In some embodiments, the first ROC device comprises logic to store information about each RAID device in the cluster of ROC devices. In some embodiments, the information comprises information about one or more virtual disks managed by each of the plurality of RAID devices in the ROC cluster.

In some embodiments, the first ROC device comprises logic to receive the second host IO. In some embodiments, the first ROC device comprises logic to identify the second ROC device as managing the second virtual disk. In some embodiments, the first ROC device comprises logic to transmit the second host IO for reception by the second ROC device.

In some embodiments, the first ROC device comprises logic to store information about a plurality of IOC devices. In some embodiments, the plurality of IOC devices comprises the first IOC device and the second IOC device. In some embodiments, the first ROC device comprises logic to identify the second ROC device as managing the second virtual disk. In some embodiments, the first ROC device comprises logic to transmit to the second ROC device configuration information about the first IOC device, the second IOC device, the third physical disk, and the fourth physical disk.

In some embodiments, the second ROC device comprises logic to communicate with the host using direct memory access (DMA). In some embodiments, each of the RAID devices in the ROC cluster, and each of the plurality of IOC devices, communicates via peer-to-peer communications over a high-speed bus. In some embodiments, the high-speed bus is a Peripheral Component Interconnect Express (PCle) bus comprises a PCIe hub. In some embodiments, the peer-to-peer communications comprise PCIe vendor-defined messages (VDM). In some embodiments, communication between and among the ROC devices and IOC devices is separate from the host. In some embodiments, the first IOC device comprises logic to transfer data involved in the first drive IO directly with the host using direct memory access (DMA).

A device in accordance with another set of embodiments might be a redundant array of independent disks (RAID) on chip (ROC) device. In some embodiments, the ROC device comprises logic to manage a virtual disk comprising one or more spans. In some embodiments, each span comprises one or more arms. In some embodiments, each arm corresponds to a different physical disk. In some embodiments, the one or more spans comprises a first span. In some embodiments, the first span comprises a first arm corresponding to a first physical disk in communication with a first input-output controller (IOC) device separate from the ROC device. In some embodiments, the first span comprises a second arm corresponding to a second physical disk in in communication with a second IOC device separate from the ROC device. In some embodiments, the ROC device has no direct communication with the first physical disk. In some embodiments, the ROC device has no direct communication with the second physical disk.

In some embodiments, the ROC device comprises logic to receive a first host input-output operation (IO). In some embodiments, the ROC device comprises logic to generate a first plurality of backend IOs from the first host IO. In some embodiments, the plurality of backend IOs comprises a first backend IO directed to the first arm. In some embodiments, the plurality of backend IOs comprises a second backend IO directed to the second arm. In some embodiments, the ROC device comprises logic to transmit the first backend IO for reception by a first input-output controller (IOC) device. In some embodiments, the ROC device comprises logic to transmit the second backend IO for reception by a second IOC device.

In some embodiments, the logic to generate the first plurality of backend IOs from the first host IO comprises logic to generate a first one or more accelerated IOs (ACIO) from the first host IO. In some embodiments, the logic to generate the first plurality of backend IOs from the first host IO comprises logic to generate the first plurality of backend IOs from the first one or more ACIOs.

In some embodiments, the ROC device comprises a cache manager that manages an on-device cache. In some embodiments, the ROC device comprises logic to receive a second host IO. In some embodiments, the second host IO comprises a read operation. In some embodiments, the ROC device comprises logic to generate a second one or more ACIOs from the second host IO. In some embodiments, the ROC device comprises logic to determine that at least one of the second one or more ACIOs is a cache hit. In some embodiments, the ROC device comprises logic to direct the at least one of the second one or more ACIOs to the cache manager. In some embodiments, the ROC device comprises logic to execute the at least one of the second one or more ACIOs on the cache to read data requested by the second host IO. In some embodiments, the ROC device comprises logic to return the data read from the cache to the host by direct memory access (DMA).

In some embodiments, the ROC device comprises logic to receive a first backend IO completion message from the first IOC device. In some embodiments, the ROC device comprises logic to receive a second backend IO completion message from the second IOC device. In some embodiments, the ROC device comprises logic to transmit a host IO completion message in response to receiving the first backend IO completion message and the second IO completion message.

In some embodiments, the host IO is received from a primary ROC device in communication with the host. In some embodiments, the logic to transmit a host IO completion message comprises logic to transmit the host IO completion device for reception by the primary ROC device.

In some embodiments, the ROC device comprises a Peripheral Component Interconnect Express (PCle) interface. In some embodiments, the logic to transmit the first backend IO for reception by a first IOC device comprises logic to encapsulate the first backend IO in a PCIe vendor-defined message (VDM). In some embodiments, the logic to transmit the first backend IO for reception by a first IOC device comprises logic to transmit the VDM over the PCIe interface. In some embodiments, the first backend IO comprises one or more drive IOs.

In some embodiments, the logic to receive the first host IO comprises consists of hardware circuitry. In some embodiments, the logic to generate a first plurality of backend IOs from the first host IO consists of hardware circuitry. In some embodiments, the logic to transmit the first backend IO for reception by a first IOC device consists of hardware circuitry. In some embodiments, the logic to transmit the second backend IO for reception by a second IOC device consists of hardware circuitry.

A system in accordance with another set of embodiments might comprise a redundant array of independent disk (RAID) on chip (ROC) cluster. In some embodiments, the ROC cluster comprises a plurality of input-output controller (IOC) devices. In some embodiments, each of the plurality of IOC devices comprises a physical disk interface in communication with one or more physical disks. In some embodiments, the ROC cluster comprises a plurality of ROC devices. In some embodiments, each of the plurality of ROC devices lacks a physical disk interface. In some embodiments, the plurality of ROC devices comprises one or more secondary ROC devices. In some embodiments, each of the one or more secondary ROC devices is configured (*e.g.,* programmed by logic) to manage one or more virtual disks. In some embodiments, each of the one or more virtual disks is in communication with one or more of the plurality of IOC devices. In some embodiments, the plurality of ROC devices comprises a primary ROC device in communication with each of the secondary ROC devices. In some embodiments, the primary ROC device is configured (*e.g.,* programmed by logic) to receive, from the one or more secondary ROC devices, a plurality of sets of configuration information. In some embodiments, the plurality of sets of configuration information comprises a set of configuration information for each of the one or more secondary ROC devices. In some embodiments, the primary ROC device is configured (*e.g.,* programmed by logic) to configure each of the one or more secondary ROC devices to communicate with the plurality of IOC devices to manage one or more virtual disks, *e.g.,* by issuing commands to the plurality of IOC devices. In some embodiments, the primary ROC device comprises logic to present, for a host, a unified view of the plurality of RAID devices.

In some embodiments, the ROC cluster comprises a RAID controller in communication with the primary ROC device and comprises a disk interface in communication with a plurality of physical disks. In some embodiments, the primary ROC device is configured (*e.g.,* programmed by logic) to receive a set of configuration information from the RAID controller. In some embodiments, the primary ROC device is configured (*e.g.,* programmed by logic) to configure the RAID controller to manage a virtual disk comprising a plurality of arms. In some embodiments, each of the plurality of arms corresponds to one the plurality of physical disks.

A device in accordance with another set of embodiments might be a primary redundant array of independent drives (RAID) on chip (ROC) device. In some embodiments, the primary ROC device comprises logic to manage a ROC cluster. In some embodiments, the ROC cluster comprises a plurality of RAID devices. In some embodiments, the plurality of RAID devices comprises a first RAID device. In some embodiments, the primary ROC device comprises logic to communicate with a host. In some embodiments, the primary ROC device comprises logic to communicate with the plurality of RAID devices in the cluster.

In some embodiments, the primary ROC device comprises logic to receive, *e.g.,* from the plurality of plurality of RAID devices, a plurality of sets of configuration information. In some embodiments, the plurality of sets of configuration information comprises a set of configuration information for each of the plurality of RAID devices. In some embodiments, the primary ROC device comprises logic to configure the first RAID device to manage a first virtual disk. In some embodiments, the first virtual disk comprises a plurality of arms. In some embodiments, the plurality of arms comprises a first arm corresponding to a first physical disk. In some embodiments, the plurality of arms comprises a second arm corresponding to a second physical disk.

In some embodiments, the logic to receive a plurality of sets of configuration information comprises logic to receive one or more Peripheral Component Interconnect Express (PCle) vendor-defined messages (VDM) from each of the plurality of RAID devices. In some embodiments, the plurality of sets of configuration information comprises a first set of configuration information for the first RAID device. In some embodiments, the first set of configuration information comprises characteristic information about a capability of the first RAID device. In some embodiments, the primary ROC device comprises logic to select the first RAID device based at least in part on the first set of configuration information. In some embodiments, the logic to select the first RAID device to manage the first virtual disk comprises logic to evaluate the plurality of sets of configuration information, including the first set of configuration information. In some embodiments, the logic to determine that the first RAID device would be an appropriate RAID device to manage the first virtual disk, based at least in part on evaluation of the plurality of sets of configuration information.

In some embodiments, the plurality of sets of configuration information comprises information about workloads of each of the plurality of RAID devices. In some embodiments, the logic to determine that the first RAID device would be an appropriate RAID device to manage the first virtual disk comprises logic to determine that the first RAID device would be an appropriate RAID device to manage the first virtual disk, based at least in part on evaluation of the workload of the first RAID device and the workloads of one or more other additional RAID devices.

In some embodiments, the primary ROC device comprises logic to receive a request from a host to create the first virtual disk. In some embodiments, the request specifies that the virtual disk must possess a desired capability. In some embodiments, logic to instruct the first RAID device to create the first virtual disk. In some embodiments, the logic to determine that the first RAID device would be an appropriate RAID device to manage the first virtual disk comprises logic to determine that the first RAID device is capable of managing a virtual disk with the desired capability. In some embodiments, this determination is based at least in part one the first set of characteristic information. In some embodiments, the desired capability comprises a write-back capability. In some embodiments, the first set of characteristic information includes a cache size indicating that the first RAID device is capable of managing a write-back virtual disk.

In some embodiments, the first RAID device is a second ROC device. In some embodiments, the primary ROC device comprises logic to identify one or more input-output controller (IOC) devices in communication with the first and second physical disks. In some embodiments, the logic to instruct the first RAID device to create a virtual disk comprises logic to instruct the first RAID device to create a virtual disk by communicating with the one or more IOC devices. In some embodiments, the primary ROC device comprises logic to receive confirmation from the first RAID device that the virtual disk has been created. In some embodiments, the primary ROC device comprises logic to confirm to the host that the first virtual disk has been created. In some embodiments, this confirmation is based at least in part on receiving the confirmation from the first RAID device.

In some embodiments, the primary ROC device comprises logic to poll each of the plurality of RAID devices. In some embodiments, the primary ROC device comprises logic to determine a failure of one or more devices. In some embodiments, this determination is based on based on polling each of the plurality of RAID devices. In some embodiments, the plurality of RAID devices comprises two or more ROC devices with heterogenous characteristics. In some embodiments, each of the plurality of sets of configuration information comprises a set of characteristic information. In some embodiments, each set of characteristic information comprises a board type. In some embodiments, each set of characteristic information comprises an IO queue depth. In some embodiments, each set of characteristic information comprises a cache size. In some embodiments, each set of characteristic information comprises a maximum number of IO frames supported. In some embodiments, each set of characteristic information comprises an identification of one or more supported physical drive types. In some embodiments, each set of characteristic information comprises an identification of one or more supported RAID levels.

In some embodiments, the primary ROC device comprises logic to identify an event that disrupts a workload equilibrium among the plurality of RAID devices. In some embodiments, the primary ROC device comprises logic to determine a prospective change to a workload distribution to restore the workload equilibrium among the plurality RAID devices. In some embodiments, the primary ROC device comprises logic to move at least one virtual disk among the plurality of RAID devices to produce the change to the workload distribution.

In some embodiments, the event comprises a command to convert a first virtual disk from a write-through mode to a write-back mode. In some embodiments, the primary ROC device comprises logic to determine that that the first RAID device managing the first virtual disk is not capable of managing the first virtual disk in write-back mode. In some embodiments, this determination is based at least in part on the plurality of sets of configuration information. In some embodiments, the logic to determine a prospective change to the workload distribution to restore workload equilibrium among the plurality of RAID devices comprises logic to identify a second RAID device that is capable of managing the first virtual disk in write-back mode. In some embodiments, this identification is based at least in part on the plurality of sets of configuration information.

In some embodiments, the logic to move at least one virtual disk among the plurality of RAID devices to produce the change to the workload distribution comprises logic to move the first virtual disk from the first RAID device to the second RAID device. In some embodiments, the logic to identify a change to a workload distribution to restore workload equilibrium among the plurality of RAID devices comprises logic to determine that moving the first virtual disk from the first RAID device to the second RAID device will result in a workload imbalance between the first RAID device and the second RAID device. In some embodiments, the primary ROC device comprises logic to determine a prospective change to the workload distribution to restore workload equilibrium among the plurality of RAID devices comprises logic to identify a second virtual disk managed by the second RAID device that operates in a write-through mode. In some embodiments, the primary ROC device comprises logic to determine that the first RAID device is capable of managing the second virtual disk. In some embodiments, this determination is based at least in part on the plurality of sets of configuration information. In some embodiments, the logic to move at least one virtual disk among the plurality of RAID devices to produce the change to the workload distribution comprises logic to move the second virtual disk from the second RAID device to the first RAID device. In some embodiments, the event comprises command from the host to add a virtual disk. In some embodiments, the event comprises a command from the host to delete an existing virtual disk. In some embodiments, the event comprises a failure of one or more RAID devices. In some embodiments, the event comprises a failure of one or more input-output controllers. In some embodiments, the event comprises a failure of one or more physical disks.

Another set of embodiments provides methods. In some embodiments, a method comprises managing, with a first redundant array of independent disks (RAID) on chip (ROC) device, a first virtual disk. In some embodiments, the first virtual disk comprises one or more spans. In some embodiments, each span comprises one or more arms, each arm corresponding to a different physical disk. In some embodiments, the one or more spans comprises a first span. In some embodiments, the first span comprises a first arm corresponding to a first physical disk in communication with a first input-output controller (IOC) device separate from the ROC device. In some embodiments, the first span comprises a second arm corresponding to a second physical disk in communication with second IOC device separate from the ROC device.

In some embodiments, the method comprises receiving, at the ROC device, a first host input-output operation (IO). In some embodiments, the method comprises generating, with the ROC device, a first plurality of backend IOs from the first host IO. In some embodiments, the plurality of backend IOs comprises a first backend IO directed to the first arm and/or a second backend IO directed to the second arm. In some embodiments, the method comprises transmitting, from the ROC device, the first backend IO for reception by a first input-output controller (IOC) device. In some embodiments, the method comprises transmitting, from the ROC device, the second backend IO for reception by a second IOC device.

In some embodiments, the method comprises receiving, at the first IOC device, the first backend IO. In some embodiments, the method comprises performing, with the first IOC device, a first one or more drive IOs on the first physical disk in response to the first backend IO. In some embodiments, the method comprises receiving, at the second IOC device, the first second IO. In some embodiments, the method comprises performing, with the second IOC device, a second one or more drive IOs on the first physical disk in response to receiving the second backend IO.

A method in accordance with other embodiments comprises managing, *e.g.,* by a primary redundant array of independent disks (RAID) on chip (ROC) device, a ROC cluster comprises a plurality of RAID devices. In some embodiments, the plurality of RAID devices comprises a first RAID device. In some embodiments, the method comprises communicating, *e.g.,* by the primary ROC device, with a host. In some embodiments, the method comprises communicating, *e.g.,* by the primary ROC device, with the plurality of RAID devices in the cluster. In some embodiments, the method comprises receiving, *e.g.,* at the primary ROC device and from the plurality of RAID devices, a plurality of sets of configuration information. In some embodiments, the plurality of sets of configuration information comprises a set of configuration information for each for the plurality of RAID devices. In some embodiments, the method comprises configuring, *e.g.,* with the primary ROC device, a first RAID device to manage a first virtual disk. In some embodiments, the first virtual disk comprises a plurality of arms. In some embodiments, the plurality of arms comprises a first arm corresponding to a first physical disk and/or a second arm corresponding to a second physical disk.

### Conclusion

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit the implementations to the precise form disclosed. One skilled in the art will recognize that modifications may be made in light of the above disclosure or may be acquired from practice of the implementations, all of which can fall within the scope of various embodiments. For example, as noted above, the methods and processes described herein may be implemented using software components, firmware and/or hardware components (including without limitation processors, other hardware circuitry, custom integrated circuits (ICs), programmable logic, etc.) and/or any combination thereof.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Likewise, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods does not limit the implementations unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and may also be used interchangeably with "and/or," unless explicitly stated otherwise (*e.g.,* if used in combination with "either" or "only one of"). Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refers to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (*e.g.,* related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Thus, while each dependent claim listed below may directly depend on only one claim, the disclosure of various implementations includes each dependent claim in combination with every other claim in the claim set. No element, act, or instruction used herein should be construed as critical or essential unless explicitly described as such.

## Claims

1. A system, comprising:
a first input-output controller (IOC) device in communication with a first plurality of physical disks, the first plurality of physical disks comprising a first physical disk;
a second IOC in communication with a second plurality of physical disks, the second plurality of physical disks comprising a second physical disk;
a first redundant array of independent disks (RAID) on chip (ROC) device, comprising:
hardware circuitry to manage a first virtual disk comprising one or more spans, each span comprising one or more arms, each arm corresponding to a different physical disk, the one or more spans comprising a first span, the first span comprising:
a first arm corresponding to the first physical disk; and
a second arm corresponding to the second physical disk;
hardware circuitry to receive a first host IO from a host;
hardware circuitry to generate a first plurality of backend IOs from the first host IO, the plurality of backend IOs comprising:
a first backend IO directed to the first arm; and
a second backend IO directed to the second arm;
hardware circuitry to transmit the first backend IO for reception by the first IOC device; and
hardware circuitry to transmit the second backend IO for reception by the second IOC device;
wherein:
the first IOC device comprises:
hardware circuitry to receive the first backend IO; and
hardware circuitry to perform a first one or more drive IOs on the first physical disk in response to receiving the first backend IO; and
the second IOC device comprises:
hardware circuitry to receive the second backend IO; and
hardware circuitry to perform a second one or more drive IOs on the second physical disk in response receiving to the second backend IO.

2. The system of claim 1, wherein:
the first plurality of disks further comprises a third physical disk;
the second plurality of disks further comprises a fourth physical disk; and
the system further comprises a second ROC device, the second ROC device comprising:
hardware circuitry to manage a second virtual disk comprising a second span, the second span comprising:
a third arm corresponding to the third physical disk; and
a fourth arm corresponding to the fourth physical disk;
hardware circuitry to receive a second host IO;
hardware circuitry to generate a second plurality of backend IOs from the first host IO, the plurality of backend IOs comprising:
a third backend IO directed to the third arm; and
a fourth backend IO directed to the fourth arm;
hardware circuitry to transmit the third backend IO for reception by the first IOC device; and
hardware circuitry to transmit the fourth backend IO for reception by the second IOC device.

3. The system of claim 2, further comprising:
a ROC cluster comprising a plurality of RAID devices, the plurality of RAID devices comprising the first ROC device and the second ROC device;
wherein:
the first ROC device is a primary ROC device; and
the first ROC device further comprises:
logic to store information about each RAID device in the cluster of ROC devices, the information comprising:
information about one or more virtual disks managed by each of the plurality of RAID devices in the ROC cluster.

4. The system of claim 3, wherein the first ROC device further comprises:
logic to receive the second host IO;
logic to identify the second ROC device as managing the second virtual disk; and
logic to transmit the second host IO for reception by the second ROC device,
and/or
wherein communication between and among the ROC devices and IOC devices is separate from the host.

5. The system of any of claims 3 or 4, wherein the first ROC device further comprises:
logic to store information about a plurality of IOC devices, the plurality of IOC devices comprising the first IOC device and the second IOC device;
logic to identify the second ROC device as managing the second virtual disk; and
logic to transmit to the second ROC device configuration information about the first IOC device, the second IOC device, the third physical disk, and the fourth physical disk,
and/or
wherein the second ROC device further comprises: logic to communicate with the host using direct memory access (DMA).

6. The system of any of claims 3 to 5, wherein each of the RAID devices in the ROC cluster, and each of the plurality of IOC devices, communicates via peer-to-peer communications over a high-speed bus,
in particular,
wherein: the high-speed bus is a Peripheral Component Interconnect Express (PCle) bus comprising a PCIe hub; and the peer-to-peer communications comprise PCIe vendor-defined messages (VDM).

7. The system of any of the previous claims, wherein:
the first IOC device further comprises:
logic to transfer data involved in the first drive IO directly with the host using direct memory access (DMA).

8. A redundant array of independent disks (RAID) on chip (ROC) device comprising:
logic to manage a virtual disk comprising one or more spans, each span comprising one or more arms, each arm corresponding to a different physical disk, the one or more spans comprising a first span, the first span comprising:
a first arm corresponding to a first physical disk in communication with a first input-output controller (IOC) device separate from the ROC device; and
a second arm corresponding to a second physical disk in in communication with a second IOC device separate from the ROC device;
logic to receive a first host input-output operation (IO);
logic to generate a first plurality of backend IOs from the first host IO, the plurality of backend IOs comprising:
a first backend IO directed to the first arm; and
a second backend IO directed to the second arm;
logic to transmit the first backend IO for reception by a first input-output controller (IOC) device; and
logic to transmit the second backend IO for reception by a second IOC device.

9. The ROC device of claim 8, wherein the logic to generate the first plurality of backend IOs from the first host IO comprises:
logic to generate a first one or more accelerated IOs (ACIO) from the first host IO; and
logic to generate the first plurality of backend IOs from the first one or more ACIOs,
and/or
wherein the first backend IO comprises one or more drive IOs.

10. The ROC device of any of claims 8 or 9, further comprising:
a cache manager that manages an on-device cache;
logic to receive a second host IO, the second host IO comprising a read operation;
logic to generate a second one or more ACIOs from the second host IO;
logic to determine that at least one of the second one or more ACIOs is a cache hit;
logic to direct the at least one of the second one or more ACIOs to the cache manager;
logic to execute the at least one of the second one or more ACIOs on the cache to read data requested by the second host IO; and
logic to return the data read from the cache to the host by direct memory access (DMA).

11. The ROC device of any of claims 8 to 10, further comprising:
logic to receive a first backend IO completion message from the first IOC device;
logic to receive a second backend IO completion message from the second IOC device; and
logic to transmit a host IO completion message in response to receiving the first backend IO completion message and the second IO completion message.

12. The ROC device of claim 11, wherein:
the host IO is received from a primary ROC device in communication with the host; and
the logic to transmit a host IO completion message comprises logic to transmit the host IO completion device for reception by the primary ROC device.

13. The ROC device of any of claims 8 to 12, further comprising:
a Peripheral Component Interconnect Express (PCle) interface;
wherein the logic to transmit the first backend IO for reception by a first IOC device comprises:
logic to encapsulate the first backend IO in a PCIe vendor-defined message (VDM); and
logic to transmit the VDM over the PCIe interface.

14. The ROC device of any of claims 8 to 13, wherein:
the logic to receive the first host IO comprises consists of hardware circuitry;
the logic to generate a first plurality of backend IOs from the first host IO consists of hardware circuitry;
the logic to transmit the first backend IO for reception by a first IOC device consists of hardware circuitry; and
the logic to transmit the second backend IO for reception by a second IOC device consists of hardware circuitry,
in particular,
wherein: the ROC device has no direct communication with the first physical disk; and the ROC device has no direct communication with the second physical disk.

15. A method comprising:
managing, with a first redundant array of independent disks (RAID) on chip (ROC) device, first virtual disk comprising one or more spans, each span comprising one or more arms, each arm corresponding to a different physical disk, the one or more spans comprising a first span, the first span comprising:
a first arm corresponding to a first physical disk in communication with a first input-output controller (IOC) device separate from the ROC device; and
a second arm corresponding to a second physical disk in communication with second IOC device separate from the ROC device;
receiving, at the ROC device, a first host input-output operation (IO);
generating, with the ROC device, a first plurality of backend IOs from the first host IO, the plurality of backend IOs comprising:
a first backend IO directed to the first arm; and
a second backend IO directed to the second arm;
transmitting, from the ROC device, the first backend IO for reception by a first input-output controller (IOC) device; and
transmitting, from the ROC device, the second backend IO for reception by a second IOC device.
